# EUROPEAN PATENT SPECIFICATION

(11) **EP 3 310 010 B1**
(45) Date of publication and mention of the grant of the patent: **01.07.2020**
(21) Application number: 16845675.4
(22) Date of filing: 07.09.2016
(51) Int. Cl.: H04L 12/723, H04L 12/741, H04L 12/707, H04L 12/717, H04L 12/947

(54) **METHOD FOR ALLOCATING GLOBAL LABEL, METHOD FOR ACQUIRING GLOBAL LABEL AND RELATED DEVICE**
VERFAHREN ZUR ZUWEISUNG EINES GLOBALEN ETIKETTS, VERFAHREN ZUR ERFASSUNG EINES GLOBALEN ETIKETTS UND ENTSPRECHENDE VORRICHTUNG
PROCÉDÉ D'ALLOCATION D'ÉTIQUETTE GLOBALE, PROCÉDÉ D'ACQUISITION D'ÉTIQUETTE GLOBALE ET DISPOSITIF ASSOCIÉ

(30) Priority: 16.09.2015 CN 201510590096
(43) Date of publication of application: 18.04.2018
(73) Proprietor: Huawei Technologies Co., Ltd., Longgang District Shenzhen, Guangdong 518129 (CN)
(72) Inventor: LI, Zhenbin, Shenzhen Guangdong 518129 (CN); CHEN, Xia, Shenzhen Guangdong 518129 (CN); WU, Nan, Shenzhen Guangdong 518129 (CN); ZHUANG, Shunwan, Shenzhen Guangdong 518129 (CN); LIANG, Qiandeng, Shenzhen Guangdong 518129 (CN)
(74) Representative: Gill Jennings & Every LLP
(86) International application number: PCT/CN2016/098359
(87) International publication number: WO 2017/045561

(56) References cited:
- CN-A- 102 710 533
- CN-A- 102 769 540
- CN-A- 103 354 520
- CN-A- 104 243 362
- CN-A- 104 579 966
- US-A1- 2005 169 266
- US-A1- 2015 103 844
- QUINTIN ZHAO ROBIN LI HUAWEI TECHNOLOGIES KING KE TENCENT HOLDINGS LTD LUYUAN FANG MICROSOFT CHAO ZHOU CISCO SYSTEMS: "The Use Cases for Using PCE as the Central Controller(PCECC) of LSPs; draft-zhao-pce-central-controller-user-cas es-02.txt", THE USE CASES FOR USING PCE AS THE CENTRAL CONTROLLER(PCECC) OF LSPS; DRAFT-ZHAO-PCE-CENTRAL-CONTROLLER-USER-CAS ES-02.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZ, 6 July 2015 (2015-07-06), pages 1-25, XP015107546, [retrieved on 2015-07-06]
- LI Q ZHAO X CHEN HUAWEI TECHNOLOGIES T YANG CHINA MOBILE R RASZUK INDIVIDUAL Z: "A Framework of MPLS Global Label; draft-li-mpls-global-label-framework-02.tx t", A FRAMEWORK OF MPLS GLOBAL LABEL; DRAFT-LI-MPLS-GLOBAL-LABEL-FRAMEWORK-02.TX T, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 3 July 2014 (2014-07-03), pages 1-14, XP015100104, [retrieved on 2014-07-03]
- XU M CHEN HUAWEI X: "Advertising Global Labels Using IGP; draft-xu-rtgwg-global-label-adv-00.txt", ADVERTISING GLOBAL LABELS USING IGP; DRAFT-XU-RTGWG-GLOBAL-LABEL-ADV-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 11 July 2013 (2013-07-11), pages 1-10, XP015094412, [retrieved on 2013-07-11]

## Description

### TECHNICAL FIELD

Embodiments of the present invention relate to the field of communications technologies, and in particular, to a method for allocating a global label, a method for obtaining a global label, a controller, and a forwarding apparatus.

### BACKGROUND

A global label (global label) technology is a technology based on multiprotocol label switching (multiprotocol label switching, MPLS).

In the prior art, a global label is allocated to a forwarding apparatus by means of manual configuration. In the foregoing technical solution, efficiency of global label allocation is relatively low.

Document US2015/0103844A1 relates generally to systems and methods for transitioning a system from a tradition network to a Software Defined Network (SDN) enabled network. In some embodiments, the systems and methods may comprise the use of a Path Computation Element (PCE) as a central controller. Smooth transition between traditional network and the new SDN enabled network, especially from a cost impact assessment perspective, may be accomplished using the existing PCE components from the current network to function as the central controller of the SDN network is one choice, which not only achieves the goal of having a centralized controller to provide the functionalities needed for the central controller, but also leverages the existing PCE network components.

Document "Advertising Global Labels Using IGP" discloses in certain networks deployment scenarios, service providers would like to keep all the existing MPLS functionalities in both MPLS and GMPLS network while removing the complexity of existing signaling protocols such as LDP and RSVP-TE. In this document, it is proposed to use the PCE as a central controller so that LSP can be calculated/signaled/initiated/downloaded/managed through a centralized PCE server to each network devices along the LSP path while leveraging the existing PCE technologies as much as possible.

### SUMMARY

The present invention is defined in the independent claims. The dependent claims define particular embodiments of the invention. Embodiments provide a method for allocating a global label, a method for obtaining a global label, a controller, and a forwarding apparatus, so as to improve efficiency of global label allocation.

According to a first aspect, a method for allocating a global label is provided, including:
receiving, by a controller, a first message sent by a forwarding apparatus, where the first message carries a first label range, multiple labels included in the first label range are a subset of multiple labels included in a label space of the forwarding apparatus, and the first label range is not equal to the label space of the forwarding apparatus;
allocating, by the controller, a global label to the forwarding apparatus according to the first label range carried in the first message, where the global label is a label in the first label range;
wherein the first label range includes a label that has been allocated by the forwarding apparatus to a first label switched path, the forwarding apparatus is a node on the first label switched path, and after the receiving, by the controller, the first message, and before the allocating, by the controller, the global label to the forwarding apparatus, the method further includes:
   sending, by the controller, a second message to the forwarding apparatus, where the second message includes a second label range, the second label range includes multiple labels, the second label range is a subset of the first label range, the second message is used to instruct the forwarding apparatus to allocate a new label to a second label switched path, the new label is used to replace a label that has been allocated by the forwarding apparatus to the second label switched path, the new label is outside the second label range, the second label switched path is a subset of the first label switched path, and the label that has been allocated by the forwarding apparatus to the second label switched path is a subset of the second label range; and
   the allocating, by the controller, a global label to the forwarding apparatus according to the first label range carried in the first message, where the global label is a label in the first label range, specifically includes:
      allocating, by the controller, the global label to the forwarding apparatus according to the second label range, where the global label is a label in the second label range.

After the sending, by the controller, a second message to the forwarding apparatus, and before the allocating, by the controller, the global label to the forwarding apparatus, the method may further include:
receiving, by the controller, a third message sent by the forwarding apparatus, where the third message is used to notify the controller that the forwarding apparatus has allocated the new label to the second label switched path.

After the receiving, by the controller, a third message sent by the forwarding apparatus, and before the allocating, by the controller, the global label to the forwarding apparatus, the method may further include:
sending, by the controller, a fourth message to the forwarding apparatus, where the fourth message includes the second label range, and the fourth message is used to notify the forwarding apparatus that the controller uses the second label range as a candidate global label.

The second message may be further used to notify the forwarding apparatus that the controller uses the second label range as a candidate global label.

The first message may further carry the label that has been allocated by the forwarding apparatus to the first label switched path in the first label range, or the first message further carries an identifier of a first sub-range, an identifier of a second sub-range, a quantity of first labels, and a quantity of second labels, the first label range includes the first sub-range and the second sub-range, a label that has been allocated by the forwarding apparatus to the first label switched path in the first sub-range is the first label, a label that has been allocated by the forwarding apparatus to the first label switched path in the second sub-range is the second label, and the quantity of first labels is less than the quantity of second labels; and
after the receiving, by the controller, the first message, and before the sending, by the controller, a second message to the forwarding apparatus, the method further includes:
determining, by the controller, that the quantity of first labels is less than the quantity of second labels according to the label that has been allocated by the forwarding apparatus to the first label switched path in the first label range and is carried in the first message, or determining, by the controller, that the quantity of first labels is less than the quantity of second labels according to the quantity of first labels and the quantity of second labels carried in the first message; and
determining, by the controller, that the first sub-range is the second label range based on that the quantity of first labels is less than the quantity of second labels.

Before the receiving the first message, the method may further include:
sending, by the controller, a fifth message to the forwarding apparatus, where the fifth message is used to instruct the forwarding apparatus to send, to the controller, the label space of the forwarding apparatus, and labels that have been allocated by the forwarding apparatus or a quantity of the labels that have been allocated by the forwarding apparatus.

The first message may further carry a label that has been allocated by the forwarding apparatus to a first label switched path in the first label range, and the forwarding apparatus is a node on the first label switched path; and
the allocating, by the controller, a global label to the forwarding apparatus according to the first label range carried in the first message includes:
allocating, by the controller, the global label to the forwarding apparatus according to the first label range and the label that has been allocated by the forwarding apparatus to the first label switched path, where the global label does not intersect with the label that has been allocated by the forwarding apparatus to the first label switched path.

According to a second aspect, a method for obtaining a global label is provided, including:
sending, by a forwarding apparatus, a first message to a controller, where the first message carries a first label range, multiple labels included in the first label range are a subset of multiple labels included in a label space of the forwarding apparatus, and the first label range is not equal to the label space of the forwarding apparatus; and
obtaining, by the forwarding apparatus, a global label that is allocated by the controller to the forwarding apparatus according to the first label range carried in the first message, where the global label is a label in the first label range;
wherein the first label range includes a label that has been allocated by the forwarding apparatus to a first label switched path, the forwarding apparatus is a node on the first label switched path, and after the sending, by the forwarding apparatus, the first message to the controller, and before the obtaining, by the forwarding apparatus, the global label, the method further includes:
   receiving, by the forwarding apparatus, a second message sent by the controller, where the second message includes a second label range, the second label range includes multiple labels, the second label range is a subset of the first label range, the second message is used to instruct the forwarding apparatus to allocate a new label to a second label switched path, the new label is used to replace a label that has been allocated by the forwarding apparatus to the second label switched path, the new label is outside the second label range, the second label switched path is a subset of the first label switched path, the label that has been allocated by the forwarding apparatus to the second label switched path is a subset of the second label range, the second label range is used by the controller to allocate the global label to the forwarding apparatus, and the global label is a label in the second label range.

After the receiving, by the forwarding apparatus, the second message sent by the controller, and before the obtaining, by the forwarding apparatus, the global label, the method may further include:
sending, by the forwarding apparatus, a third message to the controller, where the third message is used to notify the controller that the forwarding apparatus has allocated the new label to the second label switched path.

After the sending, by the forwarding apparatus, the third message to the controller, and before the obtaining, by the forwarding apparatus, the global label, the method may further include:
receiving, by the forwarding apparatus, a fourth message sent by the controller, where the fourth message includes the second label range, and the fourth message is used to notify the forwarding apparatus that the controller uses the second label range as a candidate global label.

The second message may be further used to notify the forwarding apparatus that the controller uses the second label range as a candidate global label.

The second label range may be a first sub-range, the first label range includes the first sub-range and a second sub-range, the label that has been allocated by the forwarding apparatus to the first label switched path in the first label range includes a first label and a second label, a quantity of the labels that have been allocated by the forwarding apparatus to the first label switched path in the first label range includes a quantity of the first labels and a quantity of the second labels, the first label is a label in the first sub-range, the second label is a label in the second sub-range, and the quantity of first labels is less than the quantity of second labels.

Before the sending, by the forwarding apparatus, the first message to the controller, the method may further include:
receiving, by the forwarding apparatus, a fifth message sent by the controller, where the fifth message is used to instruct the forwarding apparatus to send the label space of the forwarding apparatus to the controller, and the fifth message is further used to instruct the forwarding apparatus to send, to the controller, labels that have been allocated by the forwarding apparatus or a quantity of the labels that have been allocated by the forwarding apparatus.

The first message may further carry a label that has been allocated by the forwarding apparatus to a first label switched path in the first label range, the forwarding apparatus is a node on the first label switched path, and the global label does not intersect with the label that has been allocated by the forwarding apparatus to the first label switched path.

According to a third aspect, a controller is provided, including:
a first receiving unit, configured to receive a first message sent by a forwarding apparatus, where the first message carries a first label range, multiple labels included in the first label range are a subset of multiple labels included in a label space of the forwarding apparatus, and the first label range is not equal to the label space of the forwarding apparatus; and
an allocation unit, configured to allocate a global label to the forwarding apparatus according to the first label range carried in the first message that is received by the first receiving unit, where the global label is a label in the first label range;
wherein the first label range includes a label that has been allocated by the forwarding apparatus to a first label switched path, the forwarding apparatus is a node on the first label switched path, the controller further includes a first sending unit, the first sending unit is configured to send a second message to the forwarding apparatus after the first receiving unit receives the first message and before the allocation unit allocates the global label to the forwarding apparatus, the second message includes a second label range, the second label range includes multiple labels, the second label range is a subset of the first label range, the second message is used to instruct the forwarding apparatus to allocate a new label to a second label switched path, the new label is used to replace a label that has been allocated by the forwarding apparatus to the second label switched path, the new label is outside the second label range, the second label switched path is a subset of the first label switched path, the label that has been allocated by the forwarding apparatus to the second label switched path is a subset of the second label range, and the global label is a label in the second label range.

The controller may further include a second receiving unit, and the second receiving unit is configured to: after the first sending unit sends the second message to the forwarding apparatus and before the allocation unit allocates the global label to the forwarding apparatus, receive a third message sent by the forwarding apparatus, where the third message is used to notify the controller that the forwarding apparatus has allocated the new label to the second label switched path.

The controller may further include a second sending unit, the second sending unit is configured to send a fourth message to the forwarding apparatus after the second receiving unit receives the third message sent by the forwarding apparatus and before the allocation unit allocates the global label to the forwarding apparatus, the fourth message includes the second label range, and the fourth message is used to notify the forwarding apparatus that the controller uses the second label range as a candidate global label.

The second message may be further used to notify the forwarding apparatus that the controller uses the second label range as a candidate global label.

The first message may further carry the label that has been allocated by the forwarding apparatus to the first label switched path in the first label range, or the first message further carries an identifier of a first sub-range, an identifier of a second sub-range, a quantity of first labels, and a quantity of second labels, the first label range includes the first sub-range and the second sub-range, a label that has been allocated by the forwarding apparatus to the first label switched path in the first label range is the first label, a label that has been allocated by the forwarding apparatus to the first label switched path in the second sub-range is the second label, and the quantity of first labels is less than the quantity of second labels; and
the controller further includes a determining unit, the determining unit is configured to: after the first receiving unit receives the first message and before the first sending unit sends the second message to the forwarding apparatus, determine that the quantity of first labels is less than the quantity of second labels according to the label that has been allocated by the forwarding apparatus to the first label switched path in the first label range and is carried in the first message, or the controller determines that the quantity of first labels is less than the quantity of second labels according to the quantity of first labels and the quantity of second labels carried in the first message, and determines that the first sub-range is the second label range based on that the quantity of first labels is less than the quantity of second labels.

The controller may further include a third sending unit, the third sending unit is configured to send a fifth message to the forwarding apparatus before the first receiving unit receives the first message sent by the forwarding apparatus, the fifth message is used to instruct the forwarding apparatus to send the label space of the forwarding apparatus to the controller, and the fifth message is further used to instruct the forwarding apparatus to send, to the controller, labels that have been allocated by the forwarding apparatus or a quantity of the labels that have been allocated by the forwarding apparatus.

The first message may further carry a label that has been allocated by the forwarding apparatus to a first label switched path in the first label range, and the forwarding apparatus is a node on the first label switched path; and
the allocation unit is specifically configured to: allocate the global label to the forwarding apparatus according to the first label range and the label that has been allocated by the forwarding apparatus to the first label switched path, where the global label does not intersect with the label that has been allocated by the forwarding apparatus to the first label switched path.

According to a fourth aspect, a forwarding apparatus is provided, including:
a first sending unit, configured to send a first message to a controller, where the first message carries a first label range, multiple labels included in the first label range are a subset of multiple labels included in a label space of the forwarding apparatus, and the first label range is not equal to the label space of the forwarding apparatus; and
an obtaining unit, configured to obtain a global label that is allocated by the controller to the forwarding apparatus according to the first label range carried in the first message, where the global label is a label in the first label range;
wherein the first label range includes a label that has been allocated by the forwarding apparatus to a first label switched path, the forwarding apparatus is a node on the first label switched path, and the forwarding apparatus further includes:
   a first receiving unit, configured to: after the first sending unit sends the first message and before the obtaining unit obtains the global label, receive a second message sent by the controller, where the second message includes a second label range, the second label range includes multiple labels, the second label range is a subset of the first label range, the second message is used to instruct the forwarding apparatus to allocate a new label to a second label switched path, the new label is used to replace a label that has been allocated by the forwarding apparatus to the second label switched path, the new label is outside the second label range, the second label switched path is a subset of the first label switched path, the label that has been allocated by the forwarding apparatus to the second label switched path is a subset of the second label range, the second label range is used by the controller to allocate the global label to the forwarding apparatus, and the global label is a label in the second label range.

The forwarding apparatus may further include:
a second sending unit, configured to send a third message to the controller after the first receiving unit receives the second message and before the obtaining unit obtains the global label, where the third message is used to notify the controller that the forwarding apparatus has allocated the new label to the second label switched path.

The forwarding apparatus may further include:
a second receiving unit, configured to: after the second sending unit sends the third message to the controller and before the obtaining unit obtains the global label, receive a fourth message sent by the controller, where the fourth message includes the second label range, and the fourth message is used to notify the forwarding apparatus that the controller uses the second label range as a candidate global label.

The second message may be further used to notify the forwarding apparatus that the controller uses the second label range as a candidate global label.

The second label range may be a first sub-range, the first label range includes the first sub-range and a second sub-range, the label that has been allocated by the forwarding apparatus to the first label switched path in the first label range includes a first label and a second label, a quantity of the labels that have been allocated by the forwarding apparatus to the first label switched path in the first label range includes a quantity of the first labels and a quantity of the second labels, the first label is a label in the first sub-range, the second label is a label in the second sub-range, and the quantity of first labels is less than the quantity of second labels.

The forwarding apparatus may further include a third receiving unit, the third receiving unit is configured to: before the first sending unit sends the first message, receive a fifth message sent by the controller, the fifth message is used to instruct the forwarding apparatus to send the label space of the forwarding apparatus to the controller, and the fifth message is further used to instruct the forwarding apparatus to send, to the controller, labels that have been allocated by the forwarding apparatus or a quantity of the labels that have been allocated by the forwarding apparatus.

The first message may carry a label that has been allocated by the forwarding apparatus to a first label switched path in the first label range, the forwarding apparatus is a node on the first label switched path, and the global label does not intersect with the label that has been allocated by the forwarding apparatus to the first label switched path.

In the foregoing technical solutions, the first message sent by the forwarding apparatus and received by the controller carries the first label range. The controller may allocate the global label to the forwarding apparatus according to the first label range. Therefore, manual configuration is not required during global label allocation, and this improves efficiency of global label allocation. In addition, the first message carries the first label range, and the global label is a label in the multiple labels included in the first label range. The global label is a label in the label space of the forwarding apparatus. Therefore, the foregoing solutions can avoid allocating a label outside the label space of the forwarding apparatus to the forwarding apparatus, thereby avoiding allocating a global label that cannot be supported by the forwarding apparatus to the forwarding apparatus. In addition, the first label range is a subset of the label space, and the first label range is not equal to the label space. Therefore, the first label range is smaller than the label space. The forwarding apparatus may reclaim a label that has been allocated by the forwarding apparatus in a label range, so that a label in the label range becomes an available label. Overheads of reclaiming, by the forwarding apparatus, a label that has been allocated by the forwarding apparatus in the first label range are less than overheads of reclaiming, by the forwarding apparatus, a label that has been allocated by the forwarding apparatus in the label space. Therefore, the foregoing technical solutions reduce overheads of reclaiming a label that has been allocated. Further, the first message may further carry the label that has been allocated by the forwarding apparatus in the first label range. Alternatively, the first message may further carry the quantity of labels that have been allocated by the forwarding apparatus to the first label switched path in the first sub-range and the quantity of labels that have been allocated by the forwarding apparatus to the first label switched path in the second sub-range. The controller may learn, from the first message, the quantity of labels that have been allocated by the forwarding apparatus. Therefore, the controller may appropriately allocate the global label to the forwarding apparatus according to the quantity of labels that have been allocated. For example, a label range with a relatively small quantity of labels that have been allocated is used as a candidate global label. The forwarding apparatus may reclaim a label that has been allocated in the label range with a relatively small quantity of labels that have been allocated. The foregoing technical solutions reduce the overheads of reclaiming, by the forwarding apparatus, a label that has been allocated, compared with reclaiming a label that has been allocated in a label range with a relatively large quantity of labels that have been allocated.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description merely show some embodiments of the present invention, and a person of ordinary skill in the art can derive other drawings from these accompanying drawings without creative efforts.
FIG. 1 is a schematic diagram of a network structure according to an embodiment;
FIG. 2 is a schematic diagram of signaling interaction according to an embodiment;
FIG. 3 is a schematic flowchart of a method for allocating a global label according to an embodiment;
FIG. 3a is a schematic flowchart of a method for allocating a global label according to an embodiment;
FIG. 4 is a schematic structural diagram of a controller according to an embodiment;
FIG. 5 is a schematic structural diagram of a controller according to an embodiment;
FIG. 6 is a schematic structural diagram of a controller according to an embodiment;
FIG. 7 is a schematic flowchart of a method for obtaining a global label according to an embodiment;
FIG. 8 is a schematic flowchart of a method for obtaining a global label according to an embodiment;
FIG. 9 is a schematic structural diagram of a forwarding apparatus according to an embodiment;
FIG. 10 is a schematic structural diagram of a forwarding apparatus according to an embodiment; and
FIG. 11 is a schematic structural diagram of a forwarding apparatus according to an embodiment.

### DESCRIPTION OF EMBODIMENTS

To make the purpose, technical solutions, and advantages of the embodiments of the present invention clearer, the following describes the technical solutions of the embodiments of the present invention with reference to the accompanying drawings in the embodiments of the present invention. Apparently, the described embodiments are a part rather than all of the embodiments of the present invention. Other embodiments obtained by a person of ordinary skill in the art based on the embodiments of the present invention without creative efforts shall fall within the protection scope of the present invention.

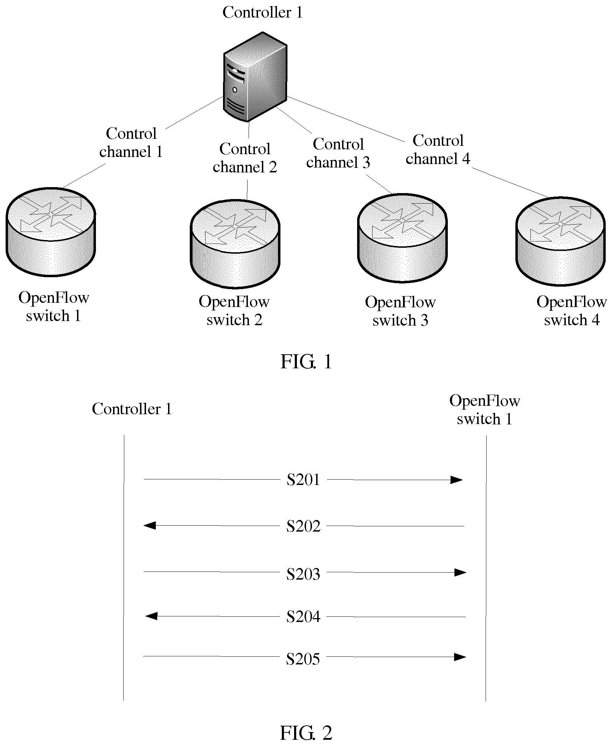

FIG. 1 is a schematic diagram of a network structure according to an embodiment of the present invention. Referring to FIG. 1, the network structure includes a controller (Controller) network and an OpenFlow switch (OpenFlow Switch) network. The controller network includes a controller 1. The OpenFlow switch network includes an OpenFlow switch 1, an OpenFlow switch 2, an OpenFlow switch 3, and an OpenFlow switch 4. The controller network may further include another controller, and the OpenFlow switch network may further include another OpenFlow switch, which are not shown in the figure. Certainly, the OpenFlow switch network may include only one OpenFlow switch, two OpenFlow switches, or three OpenFlow switches.

The controller 1 may communicate with the OpenFlow switch 1, the OpenFlow switch 2, the OpenFlow switch 3, and the OpenFlow switch 4 respectively over a control channel 1, a control channel 2, a control channel 3, and a control channel 4. A control channel may be specifically an OpenFlow channel (OpenFlow Channel). For the OpenFlow switch, the controller, and the OpenFlow channel, refer to OpenFlow Switch Specification Version 1.3.1 (OpenFlow Switch Specification Version 1.3.1) issued by Open Networking Foundation (OPEN NETWORKING FOUNDATION).

FIG. 2 is a schematic diagram of signaling interaction for communication performed by the controller 1 with the OpenFlow switch 1 over the control channel 1 in FIG. 1. Referring to FIG. 2, a procedure of the communication between the controller 1 and the OpenFlow switch 1 includes the following: The controller 1 sends a message 1 to the OpenFlow switch 1. The OpenFlow switch 1 sends a message 2 to the controller 1. The controller 1 sends a message 3 to the OpenFlow switch 1. The OpenFlow switch 1 sends a message 4 to the controller 1. The controller 1 sends a message 5 to the OpenFlow switch 1. The OpenFlow switch 1 sends a message 6 to the controller 1. The procedure is specifically described below.

S201. The controller 1 sends the message 1 to the OpenFlow switch 1.

The message 1 instructs the OpenFlow switch 1 to report, to the controller 1, a label space of the OpenFlow switch 1 and a label that has been allocated by the OpenFlow switch 1 to a label switched path or a quantity of labels that have been allocated by the OpenFlow switch 1 to a label switched path. The OpenFlow switch 1 is a node on the label switched path. The label switched path is included in the OpenFlow switch network.

For example, the OpenFlow switch 1 may be a switch supporting MPLS. A label stack (label stack) supported by the OpenFlow switch 1 may include only one MPLS label or include multiple MPLS labels.

The following describes an example of a scenario in which the label stack supported by the OpenFlow switch 1 includes only one MPLS label: The OpenFlow switch 1 receives an MPLS packet. The MPLS packet carries an MPLS header (MPLS header). A label field of the MPLS header carries an MPLS label. The label field includes 20 bits. That is, a value of the label field may be one of 220 different values. Therefore, theoretically, the label space of the OpenFlow switch 1 may be 0 to 220-1.

In addition, the OpenFlow switch 1 is a node on the OpenFlow switch network. Before S201, the controller 1 may instruct, over a control channel (for example, the control channel 1, the control channel 2, and the control channel 3), the OpenFlow switch network to establish five label switched paths (label switched path, LSP). The OpenFlow switch 1 may be a node on three of the five label switched paths. The three label switched paths are LSP1, LSP2, and LSP3, respectively.

Therefore, before S201, the OpenFlow switch 1 has respectively allocated three labels to the three label switched paths. Specifically, the OpenFlow switch 1 allocates a label 1, a label 2, and a label 3 to LSP1, LSP2, and LSP3 respectively. The OpenFlow switch 1 generates a label forwarding table entry 1, a label forwarding table entry 2, and a label forwarding table entry 3 according to the label 1, the label 2, and the label 3 respectively. A match field (match field) of the label forwarding table entry 1 includes the label 1. Therefore, the OpenFlow switch 1 has a capability of forwarding a packet carrying the label 1. Specifically, the OpenFlow switch 1 receives a packet 1 transmitted on LSP1. A header of the packet 1 carries an MPLS header. A value of a label field of the MPLS header is equal to that of the label 1. The OpenFlow switch 1 may search, according to the label 1, a label forwarding table for a label matching the label 1. A table entry matching the label 1 is the label forwarding table entry 1. The OpenFlow switch 1 may forward the packet 1 according to the label forwarding table entry 1.

For example, before S201, the OpenFlow switch 1 and the controller 1 may perform label capabilities advertisement. A label capability may specifically include reporting, by the OpenFlow switch 1, a label range to the controller 1, and allocating, by the controller 1, a global label to the OpenFlow switch 1. The label range may be the label space of the OpenFlow switch 1, excluding a label range of a label that has been allocated to an LSP and including the label range of a label that is not allocated to an LSP and a reclaimed label range. For example, Request For Comments (Request For Comments, RFC) 5492 issued by Internet Engineering Task Force (Internet Engineering Task Force, IETF) may be extended, so that when the OpenFlow switch or the controller 1 performs capabilities advertisement (capabilities advertisement), an optional parameters (Optional Parameters) field of an open message (OPEN message) can carry an extended capabilities optional parameter (Capabilities Optional Parameter) field.

For example, that the OpenFlow switch 1 and the controller 1 perform label capabilities advertisement may specifically include the following:
The controller 1 sends an open message 1 to the OpenFlow switch 1 after the controller 1 establishes a Transmission Control Protocol (Transmission Control Protocol, TCP) connection with the OpenFlow switch 1. An extended capabilities optional parameter field of the open message 1 carries information indicating whether the controller 1 has the label capability. For an extended capabilities optional parameter, refer to Table 1.

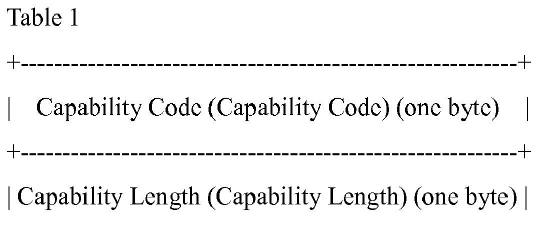

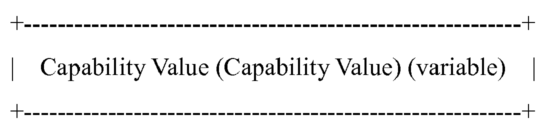

A length of a capability code (Capability Code) field is one byte. A value of a capability code is used to indicate the label capability.

A length of a capability length (Capability Length) field is one byte. A value of a capability length is used to limit a length of a capability value (Capability Value) field.

The length of the capability value (Capability Value) field is variable. When a value of the capability value field is 1, it indicates that the label capability is owned. When the value of the capability value field is 0, it indicates that the label capability is not owned.

After receiving the open message 1, the OpenFlow switch 1 determines, according to the value of the capability value field, whether the controller 1 has the label capability.

In response to the open message 1, the OpenFlow switch 1 sends an open message 2 to the controller 1. An extended capabilities optional parameter field carried in the open message 2 carries information indicating whether the OpenFlow switch 1 has the label capability. For a structure of the extended capabilities optional parameter field in the open message 2, refer to Table 1. When the value of the capability value field is 1, it indicates that the OpenFlow switch 1 has the label capability. When the value of the capability value field is 0, it indicates that the OpenFlow switch 1 does not have the label capability.

The OpenFlow switch 1 determines, according to the open message 1, that the controller 1 has the label capability. The controller 1 determines, according to the open message 2, that the OpenFlow switch 1 also has the label capability. After determining that the OpenFlow switch 1 has the label capability, the controller 1 sends the message 1 to the OpenFlow switch 1.

For example, the message 1 may carry a step size field (step size field). The step size field is used to carry a step value. The step size field is used to instruct the OpenFlow switch 1 to report the label range of the OpenFlow switch 1 to the controller 1 according to a value of the step size field. In addition, the step size field may be further used to instruct the OpenFlow switch 1 to report a quantity of allocated labels in the label range to the controller 1 according to the value of the step size field. For example, the step size field may be carried in an extended attribute of an open message. For a structure of the step size field, refer to Table 2.

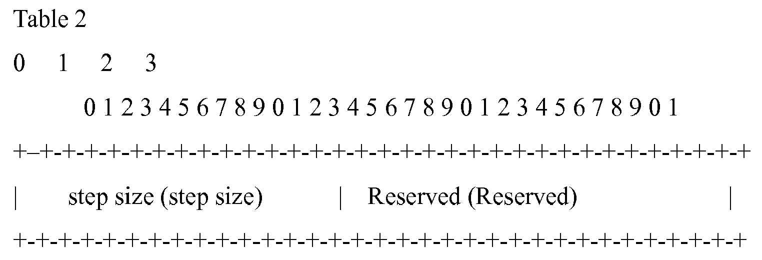

A length of the step size (step size) field is two bytes. The value of the step size field is used to instruct the OpenFlow switch to report the label range of the OpenFlow switch according to the value of the step size field. For example, when the value of the step size field is equal to 1024, the value of the step size field is used to instruct the OpenFlow switch to report the label range of the OpenFlow switch according to a step whose value is 1024.

A length of the reserved (Reserved) field is two bytes. The reserved field may be used for future extension.

S202. The OpenFlow switch 1 sends a message 2 to the controller 1.

In response to the message 1, the OpenFlow switch 1 sends the message 2 to the controller 1. The message 2 carries a label range 1. Unless otherwise specified, that a message carries a range mentioned in this application means that the message carries information used to indicate the range. For example, that the message 2 carries the label range 1 in the foregoing means that the message 2 carries information used to indicate the label range 1.

Optionally, the message 2 carries a label that has been allocated by the OpenFlow switch 1 to an LSP in the label range 1. The OpenFlow switch 1 is a node on the LSP.

For example, the label range 1 may be the label space of the OpenFlow switch 1, for example, 0 to 220-1. Labels that have been allocated by the OpenFlow switch 1 to LSPs (LSP1, LSP2, and LSP3) in 0 to 220-1 may be the label 1, the label 2, and the label 3.

In addition, the label range 1 may be one label subspace of the label space, for example, 0 to 210. Labels that have been allocated by the OpenFlow switch 1 to LSPs (LSP1 and LSP2) in 0 to 210 may be the label 1 and the label 2.

Alternatively, the label range 1 may be multiple label subspaces of the label space, for example, 0 to 210 and 210+1 to 215. Labels that have been allocated by the OpenFlow switch 1 to LSPs (LSP1 and LSP2) in 0 to 210 may be the label 1 and the label 2. A label that has been allocated by the OpenFlow switch 1 to an LSP (LSP3) in 210+1 to 215 may be the label 3. In the example, the multiple label subspaces are consecutive. In specific implementation, the multiple label subspaces may be inconsecutive. For example, the multiple label subspaces may be 0 to 210 and 210+2 to 215.

Optionally, specific implementation of S202 may be as follows:
In response to the message 1, the OpenFlow switch 1 sends the message 2 to the controller 1. The message 2 carries the label range 1.

Optionally, the message 2 carries a quantity of labels that have been allocated by the OpenFlow switch 1 to an LSP in the label range 1.

For example, the label range 1 may be the label space of the OpenFlow switch 1, for example, 0 to 220-1. Labels that have been allocated by the OpenFlow switch 1 to LSPs (LSP1, LSP2, and LSP3) in 0 to 220-1 may be the label 1, the label 2, and the label 3. Therefore, the OpenFlow switch 1 has allocated three labels to the LSPs in the label range 1.

In addition, the label range 1 may be one label subspace of the label space, for example, 0 to 210. Labels that have been allocated by the OpenFlow switch 1 to LSPs (LSP1 and LSP2) in 0 to 210 may be the label 1 and the label 2. Therefore, the OpenFlow switch 1 has allocated two labels to the LSPs in the label range 1.

Alternatively, the label range 1 may be multiple label subspaces of the label space, for example, 0 to 210 and 210+1 to 215. Labels that have been allocated by the OpenFlow switch 1 to LSPs (LSP1 and LSP2) in 0 to 210 may be the label 1 and the label 2. A label that has been allocated by the OpenFlow switch 1 to an LSP (LSP3) in 210+1 to 215 may be the label 3. Therefore, the OpenFlow switch 1 has allocated two labels to the LSPs in 0 to 210. The OpenFlow switch 1 has allocated one label to the LSP in 210+1 to 215. In the example, the multiple label subspaces are consecutive. In specific implementation, the multiple label subspaces may be inconsecutive. For example, the multiple label subspaces may be 0 to 210 and 210+2 to 215.

The label range 1 and a label that has been allocated by the OpenFlow switch 1 to an LSP in the label range 1 may be carried in an extended open message. For example, the message 2 may include a structure shown in Table 3.

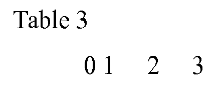

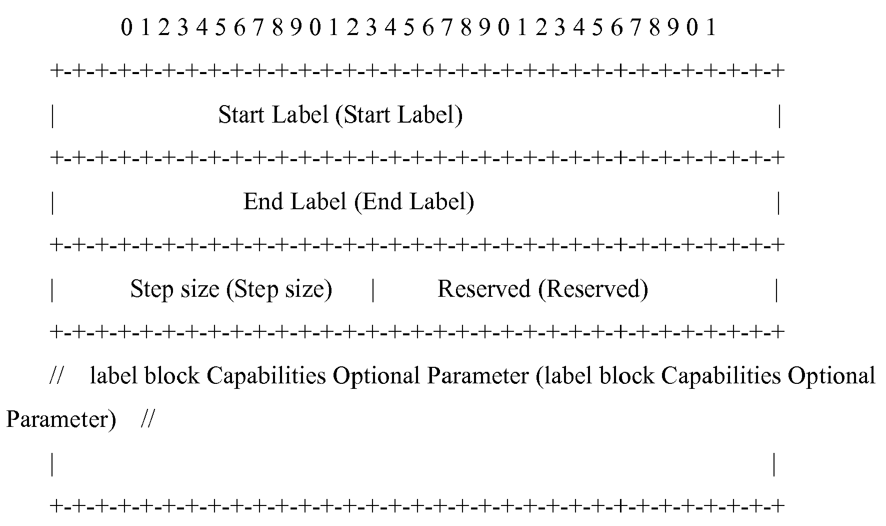

A length of the start label (Start Label) field is four bytes. The start label field is used to indicate a value of a start label in a large label range.

A length of the end label (End Label) field is four bytes. The end label field is used to indicate a value of an end label in the large label range.

A length of the step size (Step size) field is two bytes. The step size field is used to indicate a step of a small label range.

A length of the label block capabilities optional parameter (label block Capabilities Optional Parameter) field is four bytes.

For a structure of the label block capabilities optional parameter field, refer to Table 4.

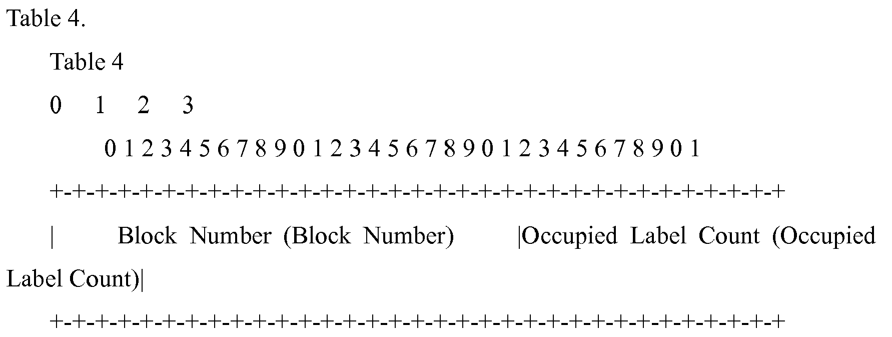

A length of the block number (Block Number) field is two bytes. A block number is used to indicate the small label range. A start label of the small label range and a quantity of labels included in the small label range are functions of the step. For example, when a value of the block number field is equal to 1, a value of a start label of a small label range corresponding to the block number field is equal to 1 multiplied by the step. A quantity of labels included in the small label range is equal to the step. That is, the small label range that corresponds to the block number field whose value is equal to 1 is <1024, 2047>. When the value of the block number field is equal to 2, a value of a start label of a small label range corresponding to the block number field is equal to 2 multiplied by the step. A quantity of labels included in the small label range is equal to the step. That is, the small label range that corresponds to the block number field whose value is equal to 2 is <2048, 3071>.

A length of the occupied label count (Occupied Label Count) field is two bytes. A value of the occupied label count field is used to indicate a quantity of allocated labels in the label range 1. The label range 1 is an intersection set of the large label range and the small label range. For example, when the value of the start label is equal to 2000, the value of the end label is equal to 3000, the value of the block number field is equal to 2, and the value of the occupied label count field is equal to 500, it indicates that the label range 1 is an intersection set of <2000, 3000> and <2048, 3071>. That is, 500 labels in <2048, 3000> have been allocated to LSPs.

It should be noted that there may be one or more label block capabilities optional parameter fields in Table 3. When the message 2 includes multiple label block capabilities optional parameter fields, the label range 1 carried in the message 2 includes multiple label ranges. In addition, the multiple label ranges correspond to multiple quantities of allocated labels respectively. For example, the value of the start label is equal to 3050. The value of the end label is equal to 4000. In a first label block capabilities optional parameter field, a value of a block number field is equal to 2, and a value of an occupied label count field is equal to 5. In a second label block capabilities optional parameter field, a value of a block number field is equal to 3, and a value of an occupied label count field is equal to 3. In the foregoing solution, the label range 1 includes two label ranges. The first label range is an intersection set of <3050, 4000> and <2048, 3071>. That is, the first label range is <3050, 3071>. The second label range is an intersection set of <3050, 4000> and <3072, 4095>. That is, the second label range is <3072, 4000>. That is, fivelabels in <3050, 3071> have been allocated to LSPs. Three labels in <3072, 4000> have been allocated to LSPs.

S203. The controller 1 sends a message 3 to the OpenFlow switch 1.

In response to the message 2, the controller 1 sends the message 3 to the OpenFlow switch 1. The message 3 carries a label range 2. The label range 2 is a subset of the label range 1. The label range 2 is not equal to the label range 1. The message 3 is used to instruct the OpenFlow switch 1 to allocate a new label to an LSP to which the OpenFlow switch 1 has allocated a label in the label range 2. The new label is outside the label range 2. By using the foregoing technical solution, the OpenFlow switch 1 reclaims the label that has been allocated by the OpenFlow switch 1 in the label range 2. The reclaimed label becomes a label that is not allocated by the OpenFlow switch 1. Therefore, the controller 1 may use a label in the label range 2 as a candidate global label.

For example, the label range 1 is 0 to 220-1. Labels that have been allocated by the OpenFlow switch 1 to LSPs (LSP1, LSP2, and LSP3) in the label range 1 are the label 1, the label 2, and the label 3. The label range 2 may be 0 to 210. Labels that have been allocated by the OpenFlow switch 1 to LSPs (LSP1 and LSP2) in the label range 2 are the label 1 and the label 2. The message 3 carries the label range 2 (for example, 0 to 210). After receiving the message 3, the OpenFlow switch 1 allocates new labels to LSP1 and LSP2. For example, a label 4 is allocated to LSP1, and a label 5 is allocated to LSP2. The label 4 and the label 5 cannot be labels in the label range 2. For example, the label 4 and the label 5 are labels in 210+1 to 220-1.

Alternatively, the label range 1 carried in the message 2 sent by the OpenFlow switch 1 to the controller 1 is a union set of a sub-range 1 (that is, 0 to 210) and a sub-range 2 (that is, 210+1 to 215). That is, the label range 1 includes the sub-range 1 (that is, 0 to 210) and the sub-range 2 (that is, 210+1 to 215). In addition, the message 2 further carries the label 1 that has been allocated by the OpenFlow switch 1 to LSP1 in the sub-range 1, the label 2 that has been allocated by the OpenFlow switch 1 to LSP2 in the sub-range 1, and the label 3 that has been allocated by the OpenFlow switch 1 to LSP3 in the sub-range 2. After receiving the message 2, the controller 1 may determine, according to the sub-range 1, the label 1, and the label 2, that the OpenFlow switch 1 has allocated two labels to LSPs in the sub-range 1. Similarly, after receiving the message 2, the controller 1 may determine, according to the sub-range 2 and the label 3, that the OpenFlow switch 1 has allocated one label to an LSP in the sub-range 2. The controller 1 generates the message 3 according to the message 2. The message 3 may carry the sub-range 1 (for example, 0 to 210). After receiving the message 3, the OpenFlow switch 1 allocates new labels to LSP1 and LSP2. For example, a label 4 is allocated to LSP1, and a label 5 is allocated to LSP2. The label 4 and the label 5 cannot be labels in 0 to 210. For example, the label 4 and the label 5 are labels in 210+1 to 216. Alternatively, the message 3 carries the sub-range 2 (that is, 210+1 to 215) instead of the sub-range 1 (that is, 0 to 210). After receiving the message 3, the OpenFlow switch 1 allocates a new label to LSP3. For example, a label 6 is allocated to LSP3. The label 6 cannot be a label in 210+1 to 215. For example, the label 6 is a label in 215+1 to 220-1.

It should be noted that the foregoing provides two alternative solutions. In the first solution, the message 3 carries the sub-range 1 (that is, 0 to 210). In the second solution, the message 3 carries the sub-range 2 (that is, 210+1 to 215). That is, after receiving the message 2 carrying the label range 1 that is the sub-range 1 (that is, 0 to 210) and the sub-range 2 (that is, 210+1 to 215), the controller 1 may determine the sub-range 1 (that is, 0 to 210) as the label range 2 or determine the sub-range 2 (that is, 210+1 to 215) as the label range 2. According to the foregoing description, the controller 1 may determine, according to the message 2, that the OpenFlow switch 1 has allocated two labels to LSPs in the sub-range 1 and the OpenFlow switch 1 has allocated one label to an LSP in the sub-range 2. That is, the controller 1 may determine that a quantity of labels that have been allocated by the OpenFlow switch 1 in the sub-range 1 is greater than a quantity of labels that have been allocated by the OpenFlow switch 1 in the sub-range 2. Therefore, if the controller 1 determines the sub-range 2 as the label range 2, a quantity of labels that need to be reclaimed by the OpenFlow switch 1 can be reduced. Further, this reduces a quantity of new labels that need to be allocated by the OpenFlow switch 1. Therefore, this reduces overheads of the OpenFlow switch 1. Specifically, when the controller 1 determines the sub-range 1 as the label range 2, the OpenFlow switch 1 needs to reclaim two labels. The OpenFlow switch 1 also needs to allocate two new labels. When the controller 1 determines the sub-range 2 as the label range 2, the OpenFlow switch 1 needs to reclaim one label. The OpenFlow switch 1 also needs to allocate one new label.

The label range 2 may be carried in an extended open message. For example, the message 3 may include a structure shown in Table 5.

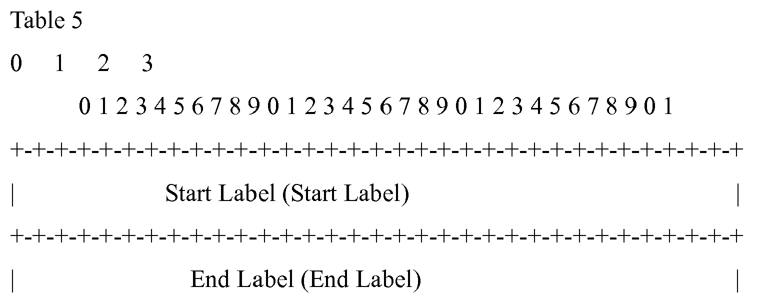

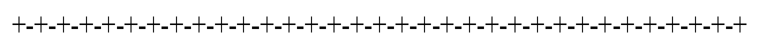

A length of the start label (Start Label) field is equal to four bytes. A value of the start label field is used to indicate a start label in the label range 2.

A length of the end label (End Label) field is equal to four bytes. A value of the end label field is used to indicate an end label in the label range 2.

Therefore, the start label (Start Label) field and the end label (End Label) field define the label range 2. For example, if the value of the start label field is equal to 3000, and the value of the end label field is equal to 3500, the label range 2 is equal to <3000, 3500>. After receiving the message 4, the controller 1 may determine that an allocated label in <3000, 3500> is reclaimed by the OpenFlow switch 1.

S204. The OpenFlow switch 1 sends a message 4 to the controller 1.

In response to the message 3, the OpenFlow switch 1 sends the message 4 to the controller 1. The message 4 is used to notify the controller 1 that the OpenFlow switch 1 has allocated the new label to the LSP to which the OpenFlow switch 1 has allocated a label in the label range 2. That is, as a node on the LSP to which the new label is allocated, the OpenFlow switch 1 may use the new label to forward traffic transmitted on the LSP to which the new label is allocated. Therefore, the OpenFlow switch 1 reclaims the label that has been allocated to the LSP in the label range 2. The label range 2 becomes a reclaimed label range. A reclaimed label range in this application is a special label range. A label in the special label range has ever been allocated by a forwarding apparatus (for example, the OpenFlow switch 1) to an LSP on which the forwarding apparatus is located. Then the allocated label is reclaimed by the forwarding apparatus. For example, the forwarding apparatus may reclaim the allocated label by allocating a new label to the LSP on which the forwarding apparatus is located. In addition, if the LSP on which the forwarding apparatus is located is revoked, the forwarding apparatus can also reclaim the allocated label.

For example, the message 4 may carry the label range 2 and information that is used to indicate that a label in the label range 2 has been reclaimed by the OpenFlow switch 1. After receiving the message 4, the controller 1 may determine, by parsing the message 4, that the OpenFlow switch 1 reclaims the label in the label range 2.

For example, before S201, labels that have been allocated by the OpenFlow switch 1 to LSPs (LSP1 and LSP2) in 0 to 210 are the label 1 and the label 2. A label that has been allocated by the OpenFlow switch 1 to an LSP (LSP3) in 210+1 to 215 may be the label 3. The OpenFlow switch 1 receives the message 3. The message 3 carries 210+1 to 215. After receiving the message 3, the OpenFlow switch 1 allocates a new label to LSP3 to which the OpenFlow switch 1 has allocated a label in 210+1 to 215. For example, the label 4 is allocated to LSP3. The label 4 is a label in 0 to 210. Therefore, the OpenFlow switch 1 may forward, according to the label 4, traffic transmitted on LSP3. The OpenFlow switch 1 does not need to use a label (for example, the label 3) in 210+1 to 215 to forward the traffic transmitted on LSP3. The foregoing means that the OpenFlow switch 1 reclaims the label (for example, the label 3) in 210+1 to 215. Therefore, the controller 1 may use the label (for example, the label 3) in 210+1 to 215 as a candidate global label.

For example, the message 4 may be an extended open message. The message 4 may carry an adjust result field. A structure of the adjust result field may be shown in Table 6.

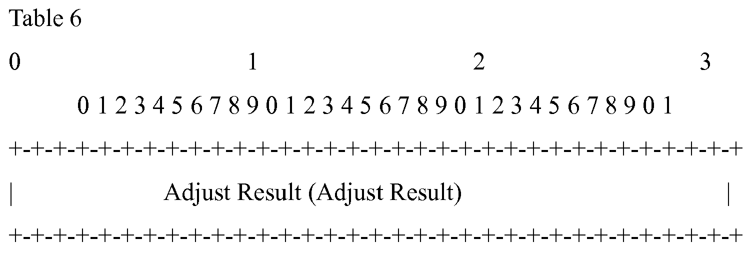

A length of the adjust result (Adjust Result) field is four bytes. The adjust result field is used to indicate whether the OpenFlow switch 1 has reclaimed the allocated label. For example, when a value of the adjust result field is equal to 1, it indicates that the OpenFlow switch 1 has reclaimed the allocated label. When the value of the adjust result field is equal to 0, it indicates that the OpenFlow switch 1 does not reclaim the allocated label.

S205. The controller 1 sends a message 5 to the OpenFlow switch 1.

In response to the message 4, the controller 1 sends the message 5 to the OpenFlow switch 1. The message 5 carries the label range 2. The message 5 is used to notify the OpenFlow switch 1 that the controller 1 uses the label range 2 as a candidate global label.

The label range 2 may be carried in an extended open message. For example, the message 5 may include a structure shown in Table 7.

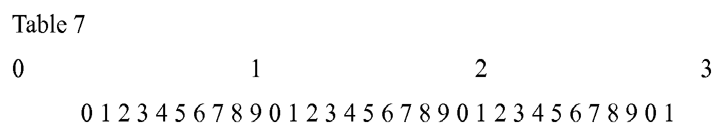

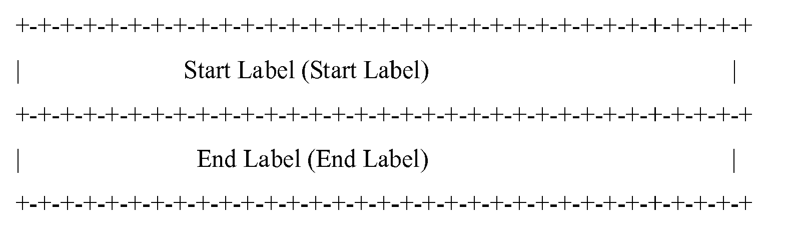

A length of the start label (Start Label) field is equal to four bytes. A value of the start label field is used to indicate a start label in the label range 2.

A length of the end label (End Label) field is equal to four bytes. A value of the end label field is used to indicate an end label in the label range 2.

Therefore, the start label (Start Label) field and the end label (End Label) field define the label range 2. For example, if the value of the start label field is equal to 3000, and the value of the end label field is equal to 3500, the label range 2 is equal to <3000, 3500>. After receiving the message 5, the OpenFlow switch 1 may determine that <3000, 3500> is used by the controller 1 as a candidate global label. After the OpenFlow switch 1 determines, according to the message 5, that the label range 2 is used by the controller 1 as a candidate global label, the OpenFlow switch 1 allocates a label outside the label range 2 to a new LSP on which the OpenFlow switch 1 is located.

After S205, the controller 1 allocates a global label to the OpenFlow switch 1 in the label range 2. Specifically, the controller 1 may send a message carrying the global label to the OpenFlow switch 1. After receiving the message carrying the global label, the OpenFlow switch 1 uses the global label as a global label of the OpenFlow switch 1 and generates a label forwarding table entry including the global label. Certainly, the controller 1 may send the message carrying the global label to another OpenFlow switch. The another OpenFlow switch uses the global label as a global label of the another OpenFlow switch and generates a label forwarding table entry including the global label.

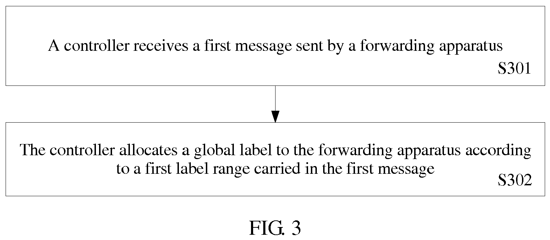

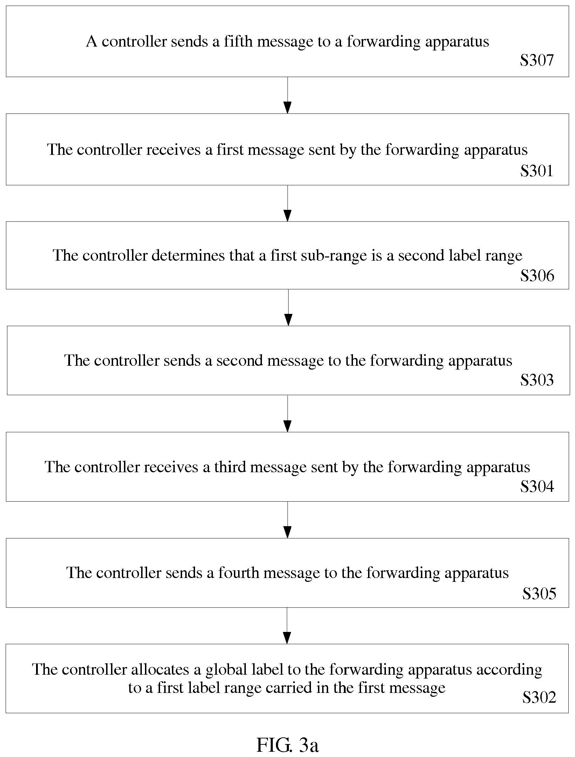

FIG. 3 is a schematic flowchart of a method for allocating a global label according to an embodiment of the present invention. The method is executed by a controller. The method may be applied to the network structure shown in FIG. 1, so as to implement the signaling interaction shown in FIG. 2. Specifically, the controller may be the controller 1 shown in FIG. 1.

Referring to FIG. 3, the method includes the following steps.

S301. The controller receives a first message sent by a forwarding apparatus.

The first message carries a first label range. Multiple labels included in the first label range are a subset of multiple labels included in a label space of the forwarding apparatus. The label space is a special label range. The label space of the forwarding apparatus is a set of all labels that can be used by the forwarding apparatus. The label space of the forwarding apparatus includes multiple labels. The first label range is not equal to the label space of the forwarding apparatus.

For example, the first label range may be one consecutive label range or multiple consecutive label ranges. Multiple labels included in a consecutive label range are consecutive. For example, the first label range may be 0 to 22-1. That is, the multiple labels in the first label range are 0, 1, 2, and 3 respectively. Apparently, 0, 1, 2, and 3 are consecutive. In addition, the first label range may be 0 to 210-1 and 215 to 220-1. Apparently, 0 to 210-1 is a consecutive label range, and 215 to 220-1 is also a consecutive label range.

Specifically, the forwarding apparatus may use a label in the label space to process a received packet. If the forwarding apparatus has not allocated a label, the label space includes a label that has not been allocated by the forwarding apparatus. If the forwarding apparatus has allocated a label, but a label that has not been allocated is further included, the label space includes the label that has been allocated by the forwarding apparatus and the label that has not been allocated by the forwarding apparatus. For example, the forwarding apparatus is a node on a label switched path. The forwarding apparatus has allocated a label to the label switched path and generated a label forwarding table entry according to the allocated label. The forwarding apparatus may forward, according to the label forwarding table entry, traffic transmitted on the label switched path. That is, the forwarding apparatus allocates the label to the label switched path, so that the forwarding apparatus has a capability of forwarding the traffic transmitted on the label switched path.

It should be noted that, that the forwarding apparatus allocates a label in this embodiment means that the forwarding apparatus allocates a label to the label switched path on which the forwarding apparatus is located. The forwarding apparatus is a node on the label switched path.

Referring to FIG. 1 and FIG. 2, the controller may be the controller 1. The forwarding apparatus may be the OpenFlow switch 1.

S302. The controller allocates a global label to the forwarding apparatus according to the first label range carried in the first message.

The global label is a label in the first label range. The global label may be one label or multiple labels.

For example, the global label may be an available label in the first label range. The available label in the first label range is a label that has not been allocated by the forwarding apparatus in the multiple labels included in the first label range, and may be specifically a label that has never been allocated by the forwarding apparatus, or may be a label reclaimed by the forwarding apparatus. The label reclaimed by the forwarding apparatus is a label that has ever been allocated by the forwarding apparatus but is reclaimed by the forwarding apparatus after being allocated by the forwarding apparatus.

For example, the global label is used to match a field in an MPLS header in a packet received by the forwarding apparatus, so as to determine a label forwarding table entry matching the packet. The global label is used to perform an MPLS-related operation other than a push, pop, or swap operation.

Specifically, the global label is used to determine whether the global label matches the field in the MPLS header in the received packet. The global label may be used to identify a network or a service.

It should be noted that the global label in this embodiment is a multiprotocol label switching global label (MPLS global label). For the MPLS global label, refer to working group draft draft-li-mpls-global-label-framework-00 issued by Internet Engineering Task Force (Internet Engineering Task Force, IETF). That the controller allocates the global label to the forwarding apparatus in this embodiment means that the controller instructs the forwarding apparatus to generate a forwarding table entry including the global label. In this way, the forwarding apparatus can process, according to the forwarding table entry including the global label, traffic transmitted on a label switched path.

FIG. 3a is a schematic flowchart of a method for allocating a global label according to an embodiment. The method shown in FIG. 3a is obtained by expanding the method for allocating a global label shown in FIG. 3. For S303, S304, S305, S306, and S307, refer to FIG. 3a.

Optionally, in the technical solution shown in FIG. 3, the first label range includes a label that has been allocated by the forwarding apparatus to a first label switched path, the forwarding apparatus is a node on the first label switched path, and after S301 and before S302, the method may further include:
S303. The controller sends a second message to the forwarding apparatus.

The second message includes a second label range. The second label range includes multiple labels. The second label range is a subset of the first label range. The second message is used to instruct the forwarding apparatus to allocate a new label to a second label switched path. The new label is used to replace a label that has been allocated by the forwarding apparatus to the second label switched path. The new label is outside the second label range. The second label switched path is a subset of the first label switched path. The label that has been allocated by the forwarding apparatus to the second label switched path is a subset of the second label range. The global label may be a label in the multiple labels included in the second label range. S302 may specifically include the following: The controller allocates the global label to the forwarding apparatus according to the second label range, where the global label is a label in the second label range. It can be understood that an intersection set of the label that has been allocated by the forwarding apparatus to the first label switched path and the multiple labels included in the second label range is equal to the label that has been allocated by the forwarding apparatus to the second label switched path.

That the new label is outside the second label range means that the new label does not intersect with the multiple labels included in the second label range. Unless otherwise specified, a label range in this application document includes at least one label. That a label range A is a subset of a label range B means that all labels included in the label range A exist in all labels included in the label range B. That a label C is a subset of a label range D means that the label C exists in all labels included in the label range D.

For example, the first label range may be 0 to 210-1. The forwarding apparatus may have allocated five labels to the first label switched path in 0 to 210-1. The first label switched path may be LSP1, LSP2, LSP3, LSP4, and LSP5. The forwarding apparatus is a node on LSP1 to LSP5. The second label range may be 25-1 to 26-1. The forwarding apparatus may have allocated three labels to the second label switched path in 25-1 to 26-1. The second label switched path may be LSP1, LSP2, and LSP3. Values of labels that have been allocated by the forwarding apparatus to LSP1, LSP2, and LSP3 are 25, 25+1, and 25+2 respectively. Values of labels that are allocated by the forwarding apparatus to LSP1, LSP2, and LSP3 after receiving the second message are 26, 26+1, and 26+2 respectively. The labels whose values are 26, 26+1, and 26+2 are respectively used to replace the labels whose values are 25, 25+1, and 25+2. Therefore, after the labels are replaced, values of labels corresponding to LSP1, LSP2, and LSP3 are 26, 26+1, and 26+2 respectively. The forwarding apparatus does not need to use the label whose value is 25 to process traffic transmitted on LSP1. The labels whose values are 25, 25+1, and 25+2 are reclaimed by the forwarding apparatus. For example, the first label range may be 0 to 210-1 and 215 to 220-1. Labels that are allocated by the forwarding apparatus to LSP1, LSP2, and LSP3 in 0 to 210-1 are a label 1, a label 2, and a label 3 respectively. Labels that are allocated by the forwarding apparatus to LSP4 and LSP5 in 215 to 220-1 are a label 4 and a label 5 respectively. The first label switched path includes LSP1, LSP2, LSP3, LSP4, and LSP5. The first message carries 0 to 210-1, 215 to 220-1, 3, and 2; 3 indicates a quantity of labels that are allocated by the forwarding apparatus in 0 to 210-1; 2 indicates a quantity of labels that are allocated by the forwarding apparatus in 215 to 220-1. Certainly, the first message may carry 0 to 210-1, 215 to 220-1, the label 1, the label 2, the label 3, the label 4, and the label 5; 0 to 210-1 corresponds to the labels 1 to 3, and 215 to 220-1 corresponds to the labels 4 and 5. After receiving the second message, the forwarding apparatus may determine that the quantity of labels that are allocated by the forwarding apparatus in 0 to 210-1 is equal to 3, and the quantity of labels that are allocated by the forwarding apparatus in 215 to 220-1 is equal to 2. Further, the forwarding apparatus determines that the second label range is equal to 215 to 220-1. The forwarding apparatus allocates new labels to LSP4 and LSP5 according to an instruction of the second message. Specifically, a value of a new label allocated to LSP4 is equal to 5, and a value of a new label allocated to LSP5 is equal to 6. Therefore, the forwarding apparatus may use the label whose value is 5 to process traffic transmitted on LSP4. The forwarding apparatus may use the label whose value is 6 to process traffic transmitted on LSP5. The forwarding apparatus does not use the label 4 to process the traffic transmitted on LSP4. The forwarding apparatus does not use the label 5 to process the traffic transmitted on LSP5. Therefore, the label 4 and the label 5 are reclaimed by the forwarding apparatus.

That the new label replaces the label that has been allocated by the forwarding apparatus to the label switched path in this embodiment means that the forwarding apparatus includes a label forwarding table entry corresponding to the label switched path. A match field of the label forwarding table entry includes the label that has been allocated by the forwarding apparatus to the label switched path. The forwarding apparatus needs to use the new label to replace the label included in the match field of the label forwarding table entry. That is, the match field of the label forwarding table entry after the replacement does not include the label that has been allocated by the forwarding apparatus to the label switched path.

An existing label advertisement protocol may be extended. For example, the label advertisement protocol may be the Label Distribution Protocol (label distribution protocol, LDP), the Resource Reservation Protocol-Traffic Engineering (resource reservation protocol-traffic engineering, RSVP-TE), or the Border Gateway Protocol (border gateway protocol, BGP). The existing label advertisement protocol may support allocation of a label to a label switched path. An extended label advertisement protocol may identify the second message carrying the second label range. The extended label advertisement protocol may not only support allocation of a label to a label switched path, but also support allocation of a new label to a label switched path to which a label has been allocated. The new label is used to replace the label that has been allocated.

Optionally, in the foregoing technical solution, after S303 and before S302, the method may further include:
S304. The controller receives a third message sent by the forwarding apparatus.

The third message is used to notify the controller that the forwarding apparatus has allocated the new label to the second label switched path.

For example, the third message may carry the second label range.

It can be learned that the forwarding apparatus has allocated the new label to the second label switched path, and uses the new label to replace the label that has been allocated by the forwarding apparatus to the second label switched path. Therefore, the forwarding apparatus reclaims the label that has been allocated by the forwarding apparatus to the second label switched path. Therefore, after receiving the third message, the controller may determine that the forwarding apparatus reclaims the label allocated by the forwarding apparatus to the second label switched path. After the forwarding apparatus reclaims the label, the controller allocates the global label to the forwarding apparatus in the second label range. The global label allocated by the controller does not conflict with a label used by the second label switched path, and this improves reliability of the forwarding apparatus acting as a node on an existing label switched path.

Optionally, in the foregoing technical solution, after S304 and before S302, the method may further include:
S305. The controller sends a fourth message to the forwarding apparatus.

The fourth message includes the second label range. The fourth message is used to notify the forwarding apparatus that the controller uses the second label range as a candidate global label.

For example, the fourth message may carry the second label range.

After the forwarding apparatus receives the fourth message including the second label range, if the forwarding apparatus needs to act as a node on a new label switched path, the forwarding apparatus does not use a label in the second label range when allocating a label to the new label switched path. Therefore, the foregoing technical solution reduces a conflict between the label allocated by the forwarding apparatus to the new label switched path and the global label allocated by the controller to the forwarding apparatus. Therefore, the foregoing solution improves reliability of the forwarding apparatus acting as a node on the new label switched path.

Optionally, in the foregoing technical solution, the second message is further used to notify the forwarding apparatus that the controller uses the second label range as a candidate global label.

Optionally, in the foregoing technical solution, the first message further carries the label that has been allocated by the forwarding apparatus to the first label switched path in the first label range, or the first message further carries an identifier of a first sub-range, an identifier of a second sub-range, a quantity of first labels, and a quantity of second labels, the first label range includes the first sub-range and the second sub-range, a label that has been allocated by the forwarding apparatus to the first label switched path in the first sub-range is the first label, a label that has been allocated by the forwarding apparatus to the first label switched path in the second sub-range is the second label, and the quantity of first labels is less than the quantity of second labels. After S301 and before S303, the method may further include:
S306. The controller determines that the first sub-range is the second label range.

Specifically, S306 may include:
The controller determines that the quantity of first labels is less than the quantity of second labels according to the label that has been allocated by the forwarding apparatus to the first label switched path in the first label range and is carried in the first message, or the controller determines that the quantity of first labels is less than the quantity of second labels according to the quantity of first labels and the quantity of second labels carried in the first message. The controller determines that the first sub-range is the second label range based on that the quantity of first labels is less than the quantity of second labels.

Optionally, in the foregoing technical solution, before S301, the method may further include:
S307. The controller sends a fifth message to the forwarding apparatus.

The fifth message is used to instruct the forwarding apparatus to send the label space of the forwarding apparatus to the controller. The fifth message is further used to instruct the forwarding apparatus to send, to the controller, labels that have been allocated by the forwarding apparatus or a quantity of the labels that have been allocated by the forwarding apparatus.

Optionally, in the foregoing technical solution, the first message further carries a label that has been allocated by the forwarding apparatus to a first label switched path in the first label range, and the forwarding apparatus is a node on the first label switched path.

S302 may include the following: The controller allocates the global label to the forwarding apparatus according to the first label range and the label that has been allocated by the forwarding apparatus to the first label switched path, where the global label does not intersect with the label that has been allocated by the forwarding apparatus to the first label switched path.

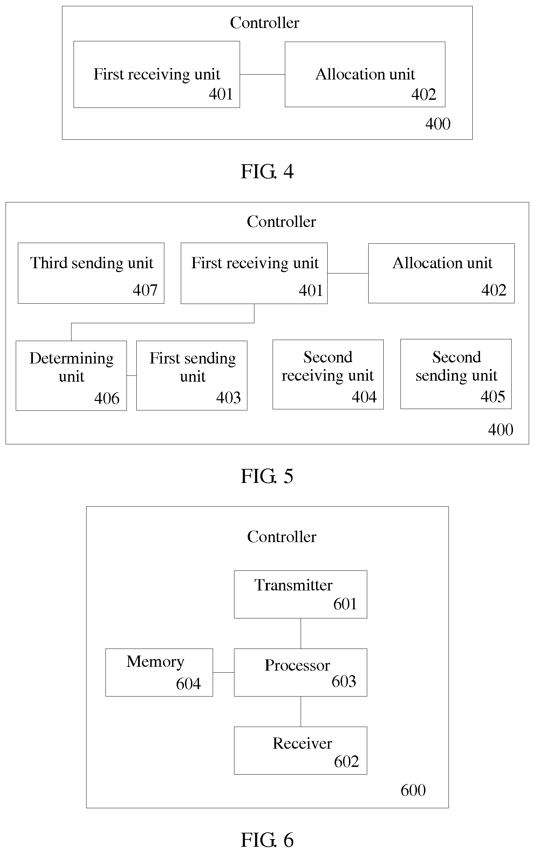

FIG. 4 is a schematic structural diagram of a controller according to an embodiment. A controller 400 may be specifically an apparatus for allocating a global label. The controller 400 may be configured to execute the method shown in FIG. 3. The controller 400 may be applied to the network structure shown in FIG. 1, so as to implement the signaling interaction shown in FIG. 2. Specifically, the controller 400 may be the controller 1 shown in FIG. 1.

Referring to FIG. 4, the controller 400 includes: a first receiving unit 401 and an allocation unit 402.

The first receiving unit 401 is configured to receive a first message sent by a forwarding apparatus.

The first message carries a first label range. Multiple labels included in the first label range are a subset of multiple labels included in a label space of the forwarding apparatus. The label space is a special label range. The label space of the forwarding apparatus is a set of all labels that can be used by the forwarding apparatus. The label space of the forwarding apparatus includes multiple labels. The first label range is not equal to the label space of the forwarding apparatus.

For example, the first label range may be one consecutive label range or multiple consecutive label ranges. Multiple labels included in a consecutive label range are consecutive. For example, the first label range may be 0 to 22-1. That is, the multiple labels in the first label range are 0, 1, 2, and 3 respectively. Apparently, 0, 1, 2, and 3 are consecutive. In addition, the first label range may be 0 to 210-1 and 215 to 220-1. Apparently, 0 to 210-1 is a consecutive label range, and 215 to 220-1 is also a consecutive label range.

Specifically, the forwarding apparatus may use a label in the label space to process a received packet. If the forwarding apparatus has not allocated a label, the label space includes a label that has not been allocated by the forwarding apparatus. If the forwarding apparatus has allocated a label, but a label that has not been allocated is further included, the label space includes the label that has been allocated by the forwarding apparatus and the label that has not been allocated by the forwarding apparatus. For example, the forwarding apparatus is a node on a label switched path. The forwarding apparatus has allocated a label to the label switched path and generated a label forwarding table entry according to the allocated label. The forwarding apparatus may forward, according to the label forwarding table entry, traffic transmitted on the label switched path. That is, the forwarding apparatus allocates the label to the label switched path, so that the forwarding apparatus has a capability of forwarding the traffic transmitted on the label switched path.

It should be noted that, that the forwarding apparatus allocates a label in this embodiment means that the forwarding apparatus allocates a label to the label switched path on which the forwarding apparatus is located. The forwarding apparatus is a node on the label switched path.

Referring to FIG. 1 and FIG. 2, the controller 400 may be the controller 1. The forwarding apparatus may be the OpenFlow switch 1.

The allocation unit 402 is configured to allocate a global label to the forwarding apparatus according to the first label range carried in the first message that is received by the first receiving unit 401.

The global label is a label in the first label range. The global label may be one label or multiple labels.

For example, the global label may be an available label in the first label range. The available label in the first label range is a label that has not been allocated by the forwarding apparatus in the multiple labels included in the first label range, and may be specifically a label that has never been allocated by the forwarding apparatus, or may be a label reclaimed by the forwarding apparatus. The label reclaimed by the forwarding apparatus is a label that has ever been allocated by the forwarding apparatus but is reclaimed by the forwarding apparatus after being allocated by the forwarding apparatus.

For example, the global label is used to match a field in an MPLS header in a packet received by the forwarding apparatus, so as to determine a label forwarding table entry matching the packet. The global label is used to perform an MPLS-related operation other than a push, pop, or swap operation.

Specifically, the global label is used to determine whether the global label matches the field in the MPLS header in the received packet. The global label may be used to identify a network or a service.

It should be noted that the controller allocates the global label to the forwarding apparatus in this embodiment means that the controller instructs the forwarding apparatus to generate a forwarding table entry including the global label. In this way, the forwarding apparatus can process, according to the forwarding table entry including the global label, traffic transmitted on a label switched path.

FIG. 5 is a schematic structural diagram of a controller according to an embodiment. A controller 400 in FIG. 5 is obtained by expanding the controller 400 shown in FIG. 4. For a first sending unit 403, a second receiving unit 404, a second sending unit 405, a determining unit 406, and a third sending unit 407, refer to FIG. 5.

Optionally, in the technical solution shown in FIG. 4, the first label range includes the label that has been allocated by the forwarding apparatus to the first label switched path, and the forwarding apparatus is a node on the first label switched path. The controller 400 may further include the first sending unit 403.

The first sending unit 403 is configured to send a second message to the forwarding apparatus after the first receiving unit 401 receives the first message and before the allocation unit 402 allocates the global label to the forwarding apparatus.

The second message includes a second label range. The second label range includes multiple labels. The second label range is a subset of the first label range. The second message is used to instruct the forwarding apparatus to allocate a new label to a second label switched path. The new label is used to replace a label that has been allocated by the forwarding apparatus to the second label switched path. The new label is outside the second label range. The second label switched path is a subset of the first label switched path. The label that has been allocated by the forwarding apparatus to the second label switched path is a subset of the second label range. The global label may be a label in the multiple labels included in the second label range. The allocation unit 402 may be specifically configured to be used by the controller to allocate the global label to the forwarding apparatus according to the second label range, where the global label is a label in the second label range. It can be understood that an intersection set of the label that has been allocated by the forwarding apparatus to the first label switched path and the multiple labels included in the second label range is equal to the label that has been allocated by the forwarding apparatus to the second label switched path.

That the new label is outside the second label range means that the new label does not intersect with the multiple labels included in the second label range.

For example, the first label range may be 0 to 210-1. The forwarding apparatus may have allocated five labels to the first label switched path in 0 to 210-1. The first label switched path may be LSP1, LSP2, LSP3, LSP4, and LSP5. The forwarding apparatus is a node on LSP1 to LSP5. The second label range may be 25-1 to 26-1. The forwarding apparatus may have allocated three labels to the second label switched path in 25-1 to 26-1. The second label switched path may be LSP1, LSP2, and LSP3. Values of labels that have been allocated by the forwarding apparatus to LSP1, LSP2, and LSP3 are 25, 25+1, and 25+2 respectively. Values of labels that are allocated by the forwarding apparatus to LSP1, LSP2, and LSP3 after receiving the second message are 26, 26+1, and 26+2 respectively. The labels whose values are 26, 26+1, and 26+2 are respectively used to replace the labels whose values are 25, 25+1, and 25+2. Therefore, after the labels are replaced, values of labels corresponding to LSP1, LSP2, and LSP3 are 26, 26+1, and 26+2 respectively. The forwarding apparatus does not need to use the label whose value is 25 to process traffic transmitted on LSP1. The labels whose values are 25, 25+1, and 25+2 are reclaimed by the forwarding apparatus. For example, the first label range may be 0 to 210-1 and 215 to 220-1. Labels that are allocated by the forwarding apparatus to LSP1, LSP2, and LSP3 in 0 to 210-1 are a label 1, a label 2, and a label 3 respectively. Labels that are allocated by the forwarding apparatus to LSP4 and LSP5 in 215 to 220-1 are a label 4 and a label 5 respectively. The first label switched path includes LSP1, LSP2, LSP3, LSP4, and LSP5. The first message carries 0 to 210-1, 215 to 220-1, 3, and 2; 3 indicates a quantity of labels that are allocated by the forwarding apparatus in 0 to 210-1; 2 indicates a quantity of labels that are allocated by the forwarding apparatus in 215 to 220-1. Certainly, the first message may carry 0 to 210-1, 215 to 220-1, the label 1, the label 2, the label 3, the label 4, and the label 5; 0 to 210-1 corresponds to the labels 1 to 3, and 215 to 220-1 corresponds to the labels 4 and 5. After receiving the second message, the forwarding apparatus may determine that the quantity of labels that are allocated by the forwarding apparatus in 0 to 210-1 is equal to 3, and the quantity of labels that are allocated by the forwarding apparatus in 215 to 220-1 is equal to 2. Further, the forwarding apparatus determines that the second label range is equal to 215 to 220-1. The forwarding apparatus allocates new labels to LSP4 and LSP5 according to an instruction of the second message. Specifically, a value of a new label allocated to LSP4 is equal to 5, and a value of a new label allocated to LSP5 is equal to 6. Therefore, the forwarding apparatus may use the label whose value is 5 to process traffic transmitted on LSP4. The forwarding apparatus may use the label whose value is 6 to process traffic transmitted on LSP5. The forwarding apparatus does not use the label 4 to process the traffic transmitted on LSP4. The forwarding apparatus does not use the label 5 to process the traffic transmitted on LSP5. Therefore, the label 4 and the label 5 are reclaimed by the forwarding apparatus.

That the new label replaces the label that has been allocated by the forwarding apparatus to the label switched path in this embodiment means that the forwarding apparatus includes a label forwarding table entry corresponding to the label switched path. A match field of the label forwarding table entry includes the label that has been allocated by the forwarding apparatus to the label switched path. The forwarding apparatus needs to use the new label to replace the label included in the match field of the label forwarding table entry. That is, the match field of the label forwarding table entry after the replacement does not include the label that has been allocated by the forwarding apparatus to the label switched path.

An existing label advertisement protocol may be extended. For example, the label advertisement protocol may be LDP, RSVP-TE, or BGP. The existing label advertisement protocol may support allocation of a label to a label switched path. An extended label advertisement protocol may identify the second message carrying the second label range. The extended label advertisement protocol may not only support allocation of a label to a label switched path, but also support allocation of a new label to a label switched path to which a label has been allocated. The new label is used to replace the label that has been allocated.

Optionally, in the foregoing technical solution, the controller 400 may further include the second receiving unit 404.

The second receiving unit 404 is configured to: after the first sending unit 403 sends the second message to the forwarding apparatus and before the allocation unit 402 allocates the global label to the forwarding apparatus, receive a third message sent by the forwarding apparatus.

The third message is used to notify the controller 400 that the forwarding apparatus has allocated the new label to the second label switched path.

For example, the third message may carry the second label range.

It can be learned that the forwarding apparatus has allocated the new label to the second label switched path, and uses the new label to replace the label that has been allocated by the forwarding apparatus to the second label switched path. Therefore, the forwarding apparatus reclaims the label that has been allocated by the forwarding apparatus to the second label switched path. Therefore, after receiving the third message, the controller 400 may determine that the forwarding apparatus reclaims the label that has been allocated by the forwarding apparatus to the second label switched path. After the forwarding apparatus reclaims the label, the controller 400 allocates the global label to the forwarding apparatus in the second label range. The global label allocated by the controller 400 does not conflict with a label used by the second label switched path, and this improves reliability of the forwarding apparatus acting as a node on an existing label switched path.

Optionally, in the foregoing technical solution, the controller 400 may further include the second sending unit 405.

The second sending unit 405 is configured to send a fourth message to the forwarding apparatus after the second receiving unit 404 receives the third message sent by the forwarding apparatus and before the allocation unit 402 allocates the global label to the forwarding apparatus.

The fourth message includes the second label range. The fourth message is used to notify the forwarding apparatus that the controller 400 uses the second label range as a candidate global label.

For example, the fourth message may carry the second label range.

After the forwarding apparatus receives the fourth message including the second label range, if the forwarding apparatus needs to act as a node on a new label switched path, the forwarding apparatus does not use a label in the second label range when allocating a label to the new label switched path. Therefore, the foregoing technical solution reduces a conflict between the label allocated by the forwarding apparatus to the new label switched path and the global label allocated by the controller to the forwarding apparatus. Therefore, the foregoing solution improves reliability of the forwarding apparatus acting as a node on the new label switched path.

Optionally, in the foregoing technical solution, the second message is further used to notify the forwarding apparatus that the controller 400 uses the second label range as a candidate global label.

Optionally, in the foregoing technical solution, the first message further carries the label that has been allocated by the forwarding apparatus to the first label switched path in the first label range, or the first message further carries an identifier of a first sub-range, an identifier of a second sub-range, a quantity of first labels, and a quantity of second labels, the first label range includes the first sub-range and the second sub-range, a label that has been allocated by the forwarding apparatus to the first label switched path in the first sub-range is the first label, a label that has been allocated by the forwarding apparatus to the first label switched path in the second sub-range is the second label, and the quantity of first labels is less than the quantity of second labels. The controller 400 may further include the determining unit 406.

The determining unit 406 is configured to determine that the first sub-range is the second label range after the first receiving unit 401 receives the first message sent by the forwarding apparatus and before the first sending unit 403 sends the second message to the forwarding apparatus.

For example, the determining unit 406 determines the second label range according to the first label range carried in the first message.

Specifically, the determining unit 406 may be configured to: determine that the quantity of first labels is less than the quantity of second labels according to the label that has been allocated by the forwarding apparatus to the first label switched path in the first label range and is carried in the first message, or determine that the quantity of first labels is less than the quantity of second labels according to the quantity of first labels and the quantity of second labels carried in the first message. It is determined that the first sub-range is the second label range based on that the quantity of first labels is less than the quantity of second labels.

Optionally, in the foregoing technical solution, the controller 400 may further include the third sending unit 407.

The third sending unit 407 is configured to send a fifth message to the forwarding apparatus before the first receiving unit 401 receives the first message sent by the forwarding apparatus.

The fifth message is used to instruct the forwarding apparatus to send the label space of the forwarding apparatus to the controller 400. The fifth message is further used to instruct the forwarding apparatus to send, to the controller, labels that have been allocated by the forwarding apparatus or a quantity of the labels that have been allocated by the forwarding apparatus.

Optionally, in the foregoing technical solution, the first message further carries a label that has been allocated by the forwarding apparatus to a first label switched path in the first label range, and the forwarding apparatus is a node on the first label switched path.

The allocation unit 402 may be configured to: allocate the global label to the forwarding apparatus according to the first label range and the label that has been allocated by the forwarding apparatus to the first label switched path, where the global label does not intersect with the label that has been allocated by the forwarding apparatus to the first label switched path.

FIG. 6 is a schematic structural diagram of a controller according to an embodiment. Referring to FIG. 6, a controller 600 includes a transmitter 601, a receiver 602, a processor 603, and a memory 604. The processor 603 is coupled to the transmitter 601, the receiver 602, and the memory 604. The memory 604 stores a computer program. The processor 603 may execute processing in this embodiment by accessing the computer program. For example, the controller 600 may be configured to implement the controller shown in FIG. 4 or FIG. 5. The controller 600 may be configured to execute the method shown in FIG. 3.

The receiver 602 is configured to receive a first message sent by a forwarding apparatus.

For example, the receiver 602 may be configured to implement the first receiving unit 401. For the first message, refer to the description in the embodiment corresponding to FIG. 4, and details are not described herein.

The processor 603 is configured to allocate a global label to the forwarding apparatus according to a first label range carried in the first message received by the receiver 602.

For example, the processor 603 may be configured to execute processing of the allocation unit 402. For the forwarding apparatus and the global label, refer to the description in the embodiment corresponding to FIG. 4, and details are not described herein.

The transmitter 601 is configured to send a second message to the forwarding apparatus after the receiver 602 receives the first message and before the processor 603 allocates the global label to the forwarding apparatus.

For example, the transmitter 601 may be configured to implement the first sending unit 403. For the second message, refer to the description in the embodiment corresponding to FIG. 5, and details are not described herein.

Optionally, the receiver 602 may be further configured to: after the transmitter 601 sends the second message to the forwarding apparatus and before the processor 603 allocates the global label to the forwarding apparatus, receive a third message sent by the forwarding apparatus.

For example, the receiver 602 may be configured to implement the second receiving unit 404. For the third message, refer to the description in the embodiment corresponding to FIG. 5, and details are not described herein.

Optionally, the transmitter 601 may be further configured to send a fourth message to the forwarding apparatus after the receiver 602 receives the third message sent by the forwarding apparatus and before the processor 603 allocates the global label to the forwarding apparatus.

For example, the transmitter 601 may be configured to implement the second sending unit 405. For the fourth message, refer to the description in the embodiment corresponding to FIG. 5, and details are not described herein.

Optionally, in the foregoing technical solution, the second message is further used to notify the forwarding apparatus that the controller uses the second label range as a candidate global label.

Optionally, in the foregoing technical solution, the first message further carries a label that has been allocated by the forwarding apparatus to the first label switched path in the first label range, or the first message further carries an identifier of a first sub-range, an identifier of a second sub-range, a quantity of first labels, and a quantity of second labels, the first label range includes the first sub-range and the second sub-range, a label that has been allocated by the forwarding apparatus to the first label switched path in the first sub-range is the first label, a label that has been allocated by the forwarding apparatus to the first label switched path in the second sub-range is the second label, and the quantity of first labels is less than the quantity of second labels. The processor 603 may be further configured to determine that the first sub-range is the second label range after the receiver 602 receives the first message sent by the forwarding apparatus and before the transmitter 601 sends the second message to the forwarding apparatus.

Specifically, the processor 603 may be configured to: determine that the quantity of first labels is less than the quantity of second labels according to the label that has been allocated by the forwarding apparatus to the first label switched path in the first label range and is carried in the first message, or determine that the quantity of first labels is less than the quantity of second labels according to the quantity of first labels and the quantity of second labels carried in the first message. It is determined that the first sub-range is the second label range based on that the quantity of first labels is less than the quantity of second labels.

Optionally, the transmitter 601 may be further configured to send a fifth message to the forwarding apparatus before the receiver 602 receives the first message sent by the forwarding apparatus.

For example, the transmitter 601 may be configured to implement the third sending unit 407. For the fifth message, refer to the description in the embodiment corresponding to FIG. 5, and details are not described herein.

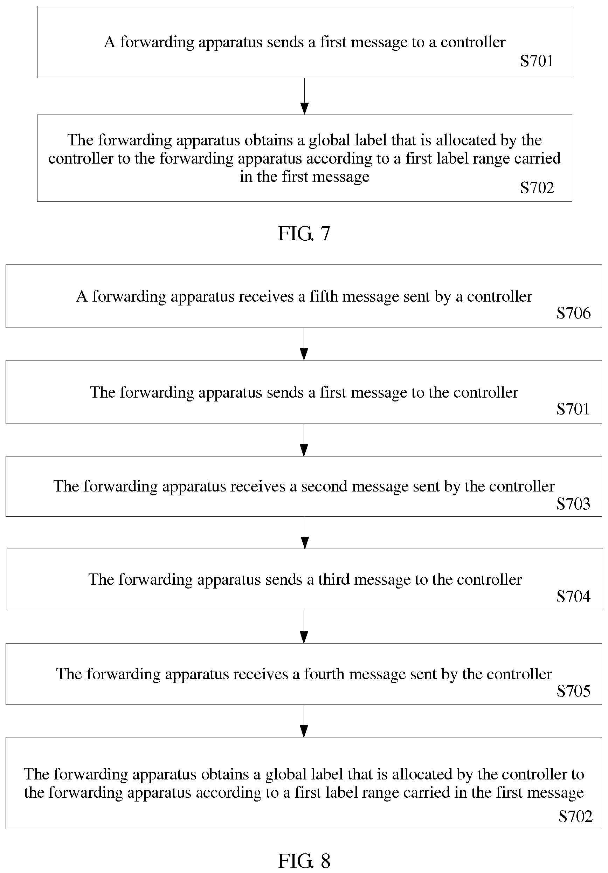

FIG. 7 is a schematic flowchart of a method for obtaining a global label according to an embodiment of the present invention. The method is executed by a forwarding apparatus. The method may be applied to the network structure shown in FIG. 1, so as to implement the signaling interaction shown in FIG. 2. Specifically, the forwarding apparatus may be the OpenFlow switch 1 shown in FIG. 1.

Referring to FIG. 7, the method includes the following steps.

S701. The forwarding apparatus sends a first message to a controller.

The first message carries a first label range. Multiple labels included in the first label range are a subset of multiple labels included in a label space of the forwarding apparatus. The label space is a special label range. The label space of the forwarding apparatus is a set of all labels that can be used by the forwarding apparatus. The label space of the forwarding apparatus includes multiple labels. The first label range is not equal to the label space of the forwarding apparatus.

For specific implementation of S701, refer to the description of S301 in the embodiment corresponding to FIG. 3. Details are not described herein.

S702. The forwarding apparatus obtains a global label that is allocated by the controller to the forwarding apparatus according to the first label range carried in the first message.

The global label is a label in the first label range. The global label may be one label or multiple labels.

For example, the global label may be an available label in the first label range. The available label in the first label range is a label that has not been allocated by the forwarding apparatus in the multiple labels included in the first label range, and may be specifically a label that has never been allocated by the forwarding apparatus, or may be a label reclaimed by the forwarding apparatus. The label reclaimed by the forwarding apparatus is a label that has ever been allocated by the forwarding apparatus but is reclaimed by the forwarding apparatus after being allocated by the forwarding apparatus.

For example, after allocating the global label, the controller may send a message carrying the global label to the forwarding apparatus. After receiving the message, the forwarding apparatus may obtain the global label from the message. For specific implementation of S702, refer to the description of S302 in the embodiment corresponding to FIG. 3. Details are not described herein.

FIG. 8 is a schematic flowchart of a method for obtaining a global label according to an embodiment. The method shown in FIG. 8 is obtained by expanding the method shown in FIG. 7. The expanded method may further include S703, S704, S705, and S706. For S703, S704, S705, and S706, refer to FIG. 8.

Optionally, in the technical solution shown in FIG. 7, the first label range includes a label that has been allocated by the forwarding apparatus to a first label switched path, and the forwarding apparatus is a node on the first label switched path. After S701 and before S702, the method may further include:
S703. The forwarding apparatus receives a second message sent by the controller.

The second message includes a second label range. The second label range includes multiple labels. The second label range is a subset of the first label range. The second message is used to instruct the forwarding apparatus to allocate a new label to a second label switched path. The new label is used to replace a label that has been allocated by the forwarding apparatus to the second label switched path. The new label is outside the second label range. The second label switched path is a subset of the first label switched path. The label that has been allocated by the forwarding apparatus to the second label switched path is a subset of the second label range. The second label range is used by the controller to allocate the global label to the forwarding apparatus. The global label may be a label in the second label range.

For example, the global label in S702 is determined in the following manner: The controller allocates the global label to the forwarding apparatus according to the second label range. It can be understood that an intersection set of the label that has been allocated by the forwarding apparatus to the first label switched path and the multiple labels included in the second label range is equal to the label that has been allocated by the forwarding apparatus to the second label switched path.

That the new label is outside the second label range means that the new label does not intersect with the multiple labels included in the second label range.

For specific implementation of S703, refer to the description of S303 in the embodiment corresponding to FIG. 3a. Details are not described herein.

Optionally, in the foregoing technical solution, after S703 and before S702, the method further includes:
S704. The forwarding apparatus sends a third message to the controller.

The third message is used to notify the controller that the forwarding apparatus has allocated the new label to the second label switched path.

For specific implementation of S704, refer to the description of S304 in the embodiment corresponding to FIG. 3a. Details are not described herein.

Optionally, in the foregoing technical solution, after S704 and before S702, the method may further include:
S705. The forwarding apparatus receives a fourth message sent by the controller.

The fourth message includes the second label range. The fourth message is used to notify the forwarding apparatus that the controller uses the second label range as a candidate global label.

For specific implementation of S705, refer to the description of S305 in the embodiment corresponding to FIG. 3a. Details are not described herein.

Optionally, in the foregoing technical solution, the second message is further used to notify the forwarding apparatus that the controller uses the second label range as a candidate global label.

Optionally, in the foregoing technical solution, the first message further carries the label that has been allocated by the forwarding apparatus to the first label switched path in the first label range, or the first message further carries an identifier of a first sub-range, an identifier of a second sub-range, a quantity of first labels, and a quantity of second labels, the first label range includes the first sub-range and the second sub-range, a label that has been allocated by the forwarding apparatus to the first label switched path in the first sub-range is the first label, a label that has been allocated by the forwarding apparatus to the first label switched path in the second sub-range is the second label, and the quantity of first labels is less than the quantity of second labels. After S701 and before S703, the controller determines that the first sub-range is the second label range. Specifically, the controller determines that the quantity of first labels is less than the quantity of second labels according to the label that has been allocated by the forwarding apparatus to the first label switched path in the first label range and is carried in the first message, or the controller determines that the quantity of first labels is less than the quantity of second labels according to the quantity of first labels and the quantity of second labels carried in the first message. The controller determines that the first sub-range is the second label range based on that the quantity of first labels is less than the quantity of second labels.

Optionally, in the foregoing technical solution, before S701, the method further includes:
S706. The forwarding apparatus receives a fifth message sent by the controller.

The fifth message is used to instruct the forwarding apparatus to send the label space of the forwarding apparatus to the controller. The fifth message is further used to instruct the forwarding apparatus to send, to the controller, labels that have been allocated by the forwarding apparatus or a quantity of the labels that have been allocated by the forwarding apparatus.

For specific implementation of S706, refer to the description of S307 in the embodiment corresponding to FIG. 3a. Details are not described herein.

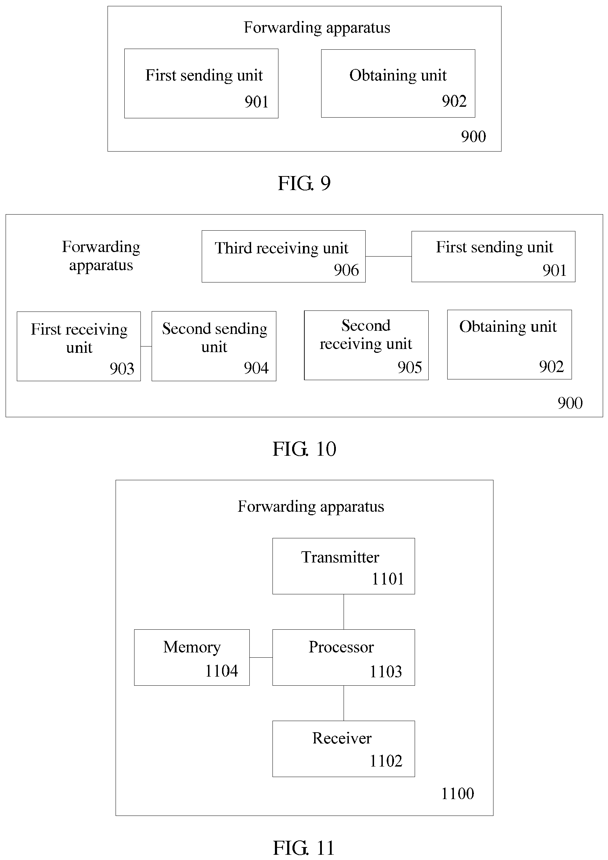

FIG. 9 is a schematic structural diagram of a forwarding apparatus according to an embodiment. The forwarding apparatus is specifically an apparatus for obtaining a global label. The forwarding apparatus may be configured to execute the method shown in FIG. 6. The forwarding apparatus may be applied to the network structure shown in FIG. 1, so as to implement the signaling interaction shown in FIG. 2. Specifically, the controller may be the OpenFlow switch 1 shown in FIG. 1.

Referring to FIG. 9, a forwarding apparatus 900 specifically includes a first sending unit 901 and an obtaining unit 902.

The first sending unit 901 is configured to send a first message to a controller.

The first message carries a first label range. Multiple labels included in the first label range are a subset of multiple labels included in a label space of the forwarding apparatus. The label space is a special label range. The label space of the forwarding apparatus is a set of all labels that can be used by the forwarding apparatus. The label space of the forwarding apparatus includes multiple labels. The first label range is not equal to the label space of the forwarding apparatus.

For example, the first sending unit 901 may be configured to execute S701. For details of the controller and the first message, refer to the description in the embodiment corresponding to FIG. 7, and the details are not described herein.

The obtaining unit 902 is configured to obtain a global label that is allocated by the controller to the forwarding apparatus according to the first label range carried in the first message.

The global label is a label in the first label range. The global label may be one label or multiple labels.

For example, the global label may be an available label in the first label range. The available label in the first label range is a label that has not been allocated by the forwarding apparatus in the multiple labels included in the first label range, and may be specifically a label that has never been allocated by the forwarding apparatus, or may be a label reclaimed by the forwarding apparatus. The label reclaimed by the forwarding apparatus is a label that has ever been allocated by the forwarding apparatus but is reclaimed by the forwarding apparatus after being allocated by the forwarding apparatus.

For example, the obtaining unit 902 may be configured to execute S702. For details of the global label, refer to the description in the embodiment corresponding to FIG. 7, and the details are not described herein.

FIG. 10 is a schematic structural diagram of a forwarding apparatus according to an embodiment. The forwarding apparatus shown in FIG. 10 is obtained by expanding the forwarding apparatus shown in FIG. 9. The expanded forwarding apparatus includes a first receiving unit 903, a second sending unit 904, a second receiving unit 905, and a third receiving unit 906. For the first receiving unit 903, the second sending unit 904, the second receiving unit 905, and the third receiving unit 906, refer to FIG. 10.

Optionally, in the foregoing technical solution, the first label range includes a label that has been allocated by the forwarding apparatus to a first label switched path, and the forwarding apparatus is a node on the first label switched path. The forwarding apparatus 900 shown in FIG. 9 may further include:
the first receiving unit 903, configured to: after the first sending unit 901 sends the first message and before the obtaining unit 902 obtains the global label, receive a second message sent by the controller.

The second message includes a second label range. The second label range includes multiple labels. The second label range is a subset of the first label range. The second message is used to instruct the forwarding apparatus to allocate a new label to a second label switched path. The new label is used to replace a label that has been allocated by the forwarding apparatus to the second label switched path. The new label is outside the second label range. The second label switched path is a subset of the first label switched path. The label that has been allocated by the forwarding apparatus to the second label switched path is a subset of the second label range. The second label range is used by the controller to allocate the global label to the forwarding apparatus. The global label may be a label in the second label range.

It can be understood that an intersection set of the label that has been allocated by the forwarding apparatus to the first label switched path and the multiple labels included in the second label range is equal to the label that has been allocated by the forwarding apparatus to the second label switched path.

That the new label is outside the second label range means that the new label does not intersect with the multiple labels included in the second label range.

For example, the first receiving unit 903 may be configured to execute the step of S703. For details of the second message, refer to the description in the embodiment corresponding to FIG. 7, and the details are not described herein.

Optionally, in the foregoing technical solution, the forwarding apparatus 900 may further include:
the second sending unit 904, configured to send a third message to the controller after the first receiving unit 903 receives the second message and before the obtaining unit 902 obtains the global label.

The third message is used to notify the controller that the forwarding apparatus has allocated the new label to the second label switched path.

For example, the second sending unit 904 may be configured to execute the step of S704. For details of the third message, refer to the description in the embodiment corresponding to FIG. 7, and the details are not described herein.

Optionally, in the foregoing technical solution, the forwarding apparatus 900 may further include:
the second receiving unit 905, configured to: after the second sending unit sends the third message to the controller and before the obtaining unit obtains the global label, receive a fourth message sent by the controller.

The fourth message includes the second label range. The fourth message is used to notify the forwarding apparatus that the controller uses the second label range as a candidate global label.

For example, the second receiving unit 905 may be configured to execute the step of S705. For details of the fourth message, refer to the description in the embodiment corresponding to FIG. 7, and the details are not described herein.

Optionally, in the foregoing technical solution, the second message is further used to notify the forwarding apparatus that the controller uses the second label range as a candidate global label.

Optionally, in the foregoing technical solution, the first message further carries the label that has been allocated by the forwarding apparatus to the first label switched path in the first label range, or the first message further carries an identifier of a first sub-range, an identifier of a second sub-range, a quantity of first labels, and a quantity of second labels, the first label range includes the first sub-range and the second sub-range, a label that has been allocated by the forwarding apparatus to the first label switched path in the first sub-range is the first label, a label that has been allocated by the forwarding apparatus to the first label switched path in the second sub-range is the second label, and the quantity of first labels is less than the quantity of second labels. The controller determines that the first sub-range is the second label range. Specifically, the controller determines that the quantity of first labels is less than the quantity of second labels according to the label that has been allocated by the forwarding apparatus to the first label switched path in the first label range and is carried in the first message, or the controller determines that the quantity of first labels is less than the quantity of second labels according to the quantity of first labels and the quantity of second labels carried in the first message. The controller determines that the first sub-range is the second label range based on that the quantity of first labels is less than the quantity of second labels.

Optionally, in the foregoing technical solution, the forwarding apparatus 900 may further include:
the third receiving unit 906, configured to: before the first sending unit sends the first message, receive a fifth message sent by the controller.

The fifth message is used to instruct the forwarding apparatus to send the label space of the forwarding apparatus to the controller. The fifth message is further used to instruct the forwarding apparatus to send, to the controller, labels that have been allocated by the forwarding apparatus or a quantity of the labels that have been allocated by the forwarding apparatus.

For example, the third receiving unit 906 may be configured to execute the step of S706. For details of the fifth message, refer to the description in the embodiment corresponding to FIG. 7, and the details are not described herein.

FIG. 11 is a schematic structural diagram of a forwarding apparatus according to an embodiment. Referring to FIG. 11, a forwarding apparatus 1100 includes a transmitter 1101, a receiver 1102, a processor 1103, and a memory 1104. The processor 1103 is coupled to the transmitter 1101, the receiver 1102, and the memory 1104. The memory 1104 stores a computer program. The processor 1103 may execute processing in this embodiment by accessing the computer program. For example, the forwarding apparatus 1100 may be configured to implement the forwarding apparatus shown in FIG. 9 or FIG. 10. The forwarding apparatus 1100 may be configured to execute the method shown in FIG. 7 or FIG. 8.

The transmitter 1101 is configured to send a first message to a controller. For the first message, refer to the description in the embodiment corresponding to FIG. 9. Particularly, refer to the description of the first sending unit 901 in the embodiment corresponding to FIG. 9.

For example, the transmitter 1101may be configured to execute S701. For details of the controller and the first message, refer to the description in the embodiment corresponding to FIG. 7, and the details are not described herein.

The processor 1103 is configured to obtain a global label that is allocated by the controller to the forwarding apparatus according to the first label range carried in the first message.

The global label is a label in the first label range. The global label may be one label or multiple labels.

For example, the processor 1103 may be configured to execute the step of S702. For details of the global label, refer to the description in the embodiment corresponding to FIG. 7, and the details are not described herein.

Optionally, in the foregoing technical solution, the first label range includes a label that has been allocated by the forwarding apparatus to a first label switched path, and the forwarding apparatus is a node on the first label switched path. The receiver 1102 may be configured to: after the transmitter 1101 sends the first message and before the processor 1103 obtains the global label, receive a second message sent by the controller.

For example, the receiver 1102 may be configured to execute the step of S703. For details of the second message, refer to the description in the embodiment corresponding to FIG. 7, and the details are not described herein.

Optionally, the transmitter 1101 may be further configured to send a third message to the controller after the receiver 1102 receives the second message and before the processor 1103 obtains the global label.

For example, the transmitter 1101 may be configured to execute the step of S704. For details of the third message, refer to the description in the embodiment corresponding to FIG. 7, and the details are not described herein.0}

Optionally, the receiver 1102 may be further configured to: after the transmitter 1101 sends the third message to the controller and before the processor 1103 obtains the global label, receive a fourth message sent by the controller.

For example, the receiver 1102 may be configured to execute the step of S705. For details of the fourth message, refer to the description in the embodiment corresponding to FIG. 7, and the details are not described herein.

Optionally, in the foregoing technical solution, the second message is further used to notify the forwarding apparatus that the controller uses the second label range as a candidate global label.

Optionally, in the foregoing technical solution, the first message further carries the label that has been allocated by the forwarding apparatus to the first label switched path in the first label range, or the first message further carries an identifier of a first sub-range, an identifier of a second sub-range, a quantity of first labels, and a quantity of second labels, the first label range includes the first sub-range and the second sub-range, a label that has been allocated by the forwarding apparatus to the first label switched path in the first sub-range is the first label, a label that has been allocated by the forwarding apparatus to the first label switched path in the second sub-range is the second label, and the quantity of first labels is less than the quantity of second labels.

Optionally, the receiver 1102 may be further configured to: before the transmitter 1101 sends the first message, receive a fifth message sent by the controller.

For example, the receiver 1102 may be configured to execute the step of S706. For details of the fifth message, refer to the description in the embodiment corresponding to FIG. 7, and the details are not described herein.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes outside the scope of the present invention.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division may merely be logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: various media that can store a computer program, such as a USB flash drive, a removable hard disk, a read-only memory (Read-Only Memory, ROM), a random access memory (Random Access Memory, RAM), a magnetic disk, or an optical disc.

## Claims

1. A method for allocating a global label, comprising:
receiving (S301), by a controller, a first message sent by a forwarding apparatus, wherein the first message carries a first label range, comprising multiple labels, wherein the multiple labels comprised in the first label range are a subset of multiple labels comprised in a label space of the forwarding apparatus, and the first label range is not equal to the label space of the forwarding apparatus; and
allocating (S302), by the controller, a global label to the forwarding apparatus according to the first label range carried in the first message, wherein the global label is a label in the first label range;
wherein the first label range comprises a label that has been allocated by the forwarding apparatus to a first label switched path, the forwarding apparatus is a node on the first label switched path, and after the receiving (S301), by a controller, the first message, and before the allocating (S302), by the controller, the global label to the forwarding apparatus, the method further comprises: sending (S303), by the controller, a second message to the forwarding apparatus, wherein the second message comprises a second label range, the second label range comprises multiple labels, the second label range is a subset of the first label range, the second message is used to instruct the forwarding apparatus to allocate a new label to a second label switched path, the new label is used to replace a first label that has been previously allocated by the forwarding apparatus to the second label switched path, the new label is outside the second label range, the second label switched path is a subset of the first label switched path, and
wherein the first label that was previously allocated by the forwarding apparatus to the second label switched path was comprised in the second label range; and the allocating (S302), by the controller, the global label to the forwarding apparatus according to the first label range carried in the first message, wherein the global label is a label in the first label range, specifically comprises:
allocating, by the controller, the global label to the forwarding apparatus according to the second label range, wherein the global label is a label in the second label range.

2. The method according to claim 1, wherein after the sending, by the controller, the second message to the forwarding apparatus, and before the allocating, by the controller, the global label to the forwarding apparatus, the method further comprises:
receiving (S304), by the controller, a third message sent by the forwarding apparatus, wherein the third message is used to notify the controller that the forwarding apparatus has allocated the new label to the second label switched path.

3. The method according to claim 2, wherein after the receiving, by the controller, the third message sent by the forwarding apparatus, and before the allocating, by the controller, the global label to the forwarding apparatus, the method further comprises:
Sending (S305), by the controller, a fourth message to the forwarding apparatus, wherein the fourth message comprises the second label range, and the fourth message is used to notify the forwarding apparatus that the controller uses the second label range as a candidate global label.

4. A method for obtaining a global label, comprising:
sending (S701), by a forwarding apparatus, a first message to a controller, wherein the first message carries a first label range comprising multiple labels, wherein the multiple labels comprised in the first label range are a subset of multiple labels comprised in a label space of the forwarding apparatus, and the first label range is not equal to the label space of the forwarding apparatus; and
obtaining (S702), by the forwarding apparatus, a global label that is allocated by the controller to the forwarding apparatus according to the first label range carried in the first message, wherein the global label is a label in the first label range;
wherein the first label range comprises a label that has been allocated by the forwarding apparatus to a first label switched path, the forwarding apparatus is a node on the first label switched path, and after the sending, by the forwarding apparatus, the first message to the controller, and before the obtaining, by the forwarding apparatus, the global label, the method further comprises: receiving (S703), by the forwarding apparatus, a second message sent by the controller, wherein the second message comprises a second label range, the second label range comprises multiple labels, the second label range is a subset of the first label range, the second message is used to instruct the forwarding apparatus to allocate a new label to a second label switched path, the new label is used to replace a first label that has been previously allocated by the forwarding apparatus to the second label switched path, the new label is outside the second label range, the second label switched path is a subset of the first label switched path, and wherein the first label that was previously allocated by the forwarding apparatus to the second label switched path was comprised in the second label range, the second label range is used by the controller to allocate the global label to the forwarding apparatus, and the global label is a label in the second label range.

5. The method according to claim 4, wherein after the receiving, by the forwarding apparatus, the second message sent by the controller, and before the obtaining, by the forwarding apparatus, a global label, the method further comprises:
sending (S704), by the forwarding apparatus, a third message to the controller, wherein the third message is used to notify the controller that the forwarding apparatus has allocated the new label to the second label switched path.

6. The method according to claim 5, wherein after the sending, by the forwarding apparatus, the third message to the controller, and before the obtaining, by the forwarding apparatus, a global label, the method further comprises:
receiving (S705), by the forwarding apparatus, a fourth message sent by the controller, wherein the fourth message comprises the second label range, and the fourth message is used to notify the forwarding apparatus that the controller uses the second label range as a candidate global label.

7. A controller (400), comprising:
a first receiving unit (401), configured to receive a first message sent by a forwarding apparatus, wherein the first message carries a first label range comprising multiple labels, wherein the multiple labels comprised in the first label range are a subset of multiple labels comprised in a label space of the forwarding apparatus, and the first label range is not equal to the label space of the forwarding apparatus; and
an allocation unit (402), configured to allocate a global label to the forwarding apparatus according to the first label range carried in the first message that is received by the first receiving unit, wherein the global label is a label in the first label range;
wherein the first label range comprises a label that has been allocated by the forwarding apparatus to a first label switched path, the forwarding apparatus is a node on the first label switched path, the controller (400) further comprises a first sending unit (403), the first sending unit (403) is configured to send a second message to the forwarding apparatus after the first receiving unit receives the first message and before the allocation unit allocates the global label to the forwarding apparatus, the second message comprises a second label range, the second label range comprises multiple labels, the second label range is a subset of the first label range, the second message is used to instruct the forwarding apparatus to allocate a new label to a second label switched path, the new label is used to replace a first label that has been previously allocated by the forwarding apparatus to the second label switched path, the new label is outside the second label range, the second label switched path is a subset of the first label switched path, and wherein the first label that was previously allocated by the forwarding apparatus to the second label switched path was comprised in the second label range, and the global label is a label in the second label range.

8. The controller (400) according to claim 7, wherein the controller (400) further comprises a second receiving unit (404), and the second receiving unit (404) is configured to: after the first sending unit (403) sends the second message to the forwarding apparatus and before the allocation unit (402) allocates the global label to the forwarding apparatus, receive a third message sent by the forwarding apparatus, wherein the third message is used to notify the controller that the forwarding apparatus has allocated the new label to the second label switched path.

9. The controller (400) according to claim 8, wherein the controller (400) further comprises a second sending unit (405), the second sending unit (405) is configured to send a fourth message to the forwarding apparatus after the second receiving unit (404) receives the third message sent by the forwarding apparatus and before the allocation unit (402) allocates the global label to the forwarding apparatus, the fourth message comprises the second label range, and the fourth message is used to notify the forwarding apparatus that the controller uses the second label range as a candidate global label.

10. The controller according to claim 7, wherein the second message is further used to notify the forwarding apparatus that the controller uses the second label range as a candidate global label.

11. The controller according to any one of claims 7 to 10, wherein the first message further carries the label that has been allocated by the forwarding apparatus to the first label switched path in the first label range, or the first message further carries an identifier of a first sub-range, an identifier of a second sub-range, a quantity of first labels, and a quantity of second labels, the first label range comprises the first sub-range and the second sub-range, a label that has been allocated by the forwarding apparatus to the first label switched path in the first label range is the first label, a label that has been allocated by the forwarding apparatus to the first label switched path in the second sub-range is the second label, and the quantity of first labels is less than the quantity of second labels; and
the controller (400) further comprises a determining unit (406), the determining unit (406) is configured to: after the first receiving unit (401) receives the first message and before the first sending unit (403) sends the second message to the forwarding apparatus, determine that the quantity of first labels is less than the quantity of second labels according to the label that has been allocated by the forwarding apparatus to the first label switched path in the first label range and is carried in the first message, or determine that the quantity of first labels is less than the quantity of second labels according to the quantity of first labels and the quantity of second labels carried in the first message, and the determining unit (406) is further configured to determine that the first sub-range is the second label range based on that the quantity of first labels is less than the quantity of second labels.

12. The controller according to any one of claims 7 to 11, wherein the controller (400) further comprises a third sending unit (407), the third sending unit (407) is configured to send a fifth message to the forwarding apparatus before the first receiving unit receives the first message sent by the forwarding apparatus, the fifth message is used to instruct the forwarding apparatus to send the label space of the forwarding apparatus to the controller, and the fifth message is further used to instruct the forwarding apparatus to send, to the controller (400), labels that have been allocated by the forwarding apparatus or a quantity of the labels that have been allocated by the forwarding apparatus.

13. The controller according to claim 7, wherein the first message further carries a label that has been allocated by the forwarding apparatus to a first label switched path in the first label range, and the forwarding apparatus is a node on the first label switched path; and
the allocation unit (402) is specifically configured to: allocate the global label to the forwarding apparatus according to the first label range and the label that has been allocated by the forwarding apparatus to the first label switched path, wherein the global label does not intersect with the label that has been allocated by the forwarding apparatus to the first label switched path.

14. A forwarding apparatus, comprising:
a first sending unit (901), configured to send a first message to a controller, wherein the first message carries a first label range, comprising multiple labels, wherein the multiple labels comprised in the first label range are a subset of multiple labels comprised in a label space of the forwarding apparatus, and the first label range is not equal to the label space of the forwarding apparatus; and
an obtaining unit (902), configured to obtain a global label that is allocated by the controller to the forwarding apparatus according to the first label range carried in the first message, wherein the global label is a label in the first label range;
wherein the first label range comprises a label that has been allocated by the forwarding apparatus to a first label switched path, the forwarding apparatus is a node on the first label switched path, and the forwarding apparatus further comprises:
a first receiving unit (903), configured to: after the first sending unit sends the first message and before the obtaining unit obtains the global label, receive a second message sent by the controller, wherein the second message comprises a second label range, the second label range comprises multiple labels, the second label range is a subset of the first label range, the second message is used to instruct the forwarding apparatus to allocate a new label to a second label switched path, the new label is used to replace a first label that has been previously allocated by the forwarding apparatus to the second label switched path, the new label is outside the second label range, the second label switched path is a subset of the first label switched path, and wherein the first label that was previously allocated by the forwarding apparatus to the second label switched path was comprised in the second label range, the second label range is used by the controller to allocate the global label to the forwarding apparatus, and the global label is a label in the second label range.

15. The forwarding apparatus according to claim 14, wherein the forwarding apparatus further comprises:
a second sending unit (904), configured to send a third message to the controller after the first receiving unit (903) receives the second message and before the obtaining unit (902) obtains the global label, wherein the third message is used to notify the controller that the forwarding apparatus has allocated the new label to the second label switched path.

16. The forwarding apparatus according to claim 15, wherein the forwarding apparatus further comprises:
a second receiving unit (905), configured to: after the second sending unit sends the third message to the controller and before the obtaining unit obtains the global label, receive a fourth message sent by the controller, wherein the fourth message comprises the second label range, and the fourth message is used to notify the forwarding apparatus that the controller uses the second label range as a candidate global label.

17. The forwarding apparatus according to claim 14, wherein the second message is further used to notify the forwarding apparatus that the controller uses the second label range as a candidate global label.

18. The forwarding apparatus according to any one of claims 14 to 17, wherein:
the second label range is a first sub-range, the first label range comprises the first sub-range and a second sub-range, the label that has been allocated by the forwarding apparatus to the first label switched path in the first label range comprises a first label and a second label, a quantity of the labels that have been allocated by the forwarding apparatus to the first label switched path in the first label range comprises a quantity of the first labels and a quantity of the second labels, the first label is a label in the first sub-range, the second label is a label in the second sub-range, and the quantity of first labels is less than the quantity of second labels.

19. The forwarding apparatus according to any one of claims 14 to 18, wherein the forwarding apparatus further comprises a third receiving unit (906), the third receiving unit (906) is configured to: before the first sending unit (901) sends the first message, receive a fifth message sent by the controller, the fifth message is used to instruct the forwarding apparatus to send the label space of the forwarding apparatus to the controller, and the fifth message is further used to instruct the forwarding apparatus to send, to the controller, labels that have been allocated by the forwarding apparatus or a quantity of labels that have been allocated by the forwarding apparatus.

20. The forwarding apparatus according to claim 14, wherein the first message further carries a label that has been allocated by the forwarding apparatus to a first label switched path in the first label range, the forwarding apparatus is a node on the first label switched path, and the global label does not intersect with the label that has been allocated by the forwarding apparatus to the first label switched path.

## Patentansprüche

1. Verfahren zur Zuweisung eines globalen Etiketts, umfassend:
Empfangen (S301), durch eine Steuerung, einer ersten Nachricht, die durch eine Weiterleitungsvorrichtung gesendet wird, wobei die erste Nachricht eine erste Etikettspanne trägt, die mehrere Etiketten umfasst, wobei die mehreren Etiketten, die in der ersten Etikettspanne enthalten sind, ein Teilsatz mehrerer Etiketten sind, der in einem Etikettraum der Weiterleitungsvorrichtung enthalten ist, und die erste Etikettspanne nicht gleich dem Etikettraum der Weiterleitungsvorrichtung ist; und
Zuweisen (S302), durch die Steuerung, eines globalen Etiketts an die Weiterleitungsvorrichtung gemäß der ersten Etikettspanne, die in der ersten Nachricht getragen wird, wobei das globale Etikett ein Etikett in der ersten Etikettspanne ist;
wobei die erste Etikettspanne ein Etikett umfasst, das einem ersten etikettvermittelten Pfad durch die Weiterleitungsvorrichtung zugewiesen worden ist, die Weiterleitungsvorrichtung ein Knoten an dem ersten etikettvermittelten Pfad ist und das Verfahren nach dem Empfangen (S301), durch eine Steuerung, der ersten Nachricht und vor dem Zuweisen (S302), durch die Steuerung, des globalen Etiketts an die Weiterleitungsvorrichtung ferner Folgendes umfasst: Senden (S303), durch die Steuerung, einer zweiten Nachricht an die Weiterleitungsvorrichtung, wobei die zweite Nachricht eine zweite Etikettspanne umfasst, die zweite Etikettspanne mehrere Etiketten umfasst, die zweite Etikettspanne ein Teilsatz der ersten Etikettspanne ist, die zweite Nachricht verwendet wird, um die Weiterleitungsvorrichtung anzuweisen, einem zweiten etikettvermittelten Pfad ein neues Etikett zuzuweisen, das neue Etikett verwendet wird, um ein erstes Etikett zu ersetzen, das dem zweiten etikettvermittelten Pfad durch die Weiterleitungsvorrichtung zuvor zugewiesen worden ist, sich das neue Etikett außerhalb der zweiten Etikettspanne befindet, der zweite etikettvermittelte Pfad ein Teilsatz des ersten etikettvermittelten Pfades ist und wobei das erste Etikett, das dem zweiten etikettvermittelten Pfad durch die Weiterleitungsvorrichtung zuvor zugewiesen wurde, in der zweiten Etikettspanne enthalten war; und
das Zuweisen (S302), durch die Steuerung, des globalen Etiketts an die Weiterleitungsvorrichtung gemäß der ersten Etikettspanne, die in der ersten Nachricht getragen wird, wobei das globale Etikett ein Etikett in der ersten Etikettspanne ist, insbesondere Folgendes umfasst:
Zuweisen, durch die Steuerung, des globalen Etiketts an die Weiterleitungsvorrichtung gemäß der zweiten Etikettspanne, wobei das globale Etikett ein Etikett in der zweiten Etikettspanne ist.

2. Verfahren nach Anspruch 1, wobei das Verfahren nach dem Senden, durch die Steuerung, der zweiten Nachricht an die Weiterleitungsvorrichtung und vor dem Zuweisen, durch die Steuerung, des globalen Etiketts an die Weiterleitungsvorrichtung ferner Folgendes umfasst:
Empfangen (S304), durch die Steuerung, einer dritten Nachricht, die durch die Weiterleitungsvorrichtung gesendet wird, wobei die dritte Nachricht verwendet wird, um die Steuerung zu benachrichtigen, dass die Weiterleitungsvorrichtung dem zweiten etikettvermittelten Pfad das neue Etikett zugewiesen hat.

3. Verfahren nach Anspruch 2, wobei das Verfahren nach dem Empfangen, durch die Steuerung, der dritten Nachricht, die durch die Weiterleitungsvorrichtung gesendet wird, und vor dem Zuweisen, durch die Steuerung, des globalen Etiketts an die Weiterleitungsvorrichtung ferner Folgendes umfasst:
Senden (S305), durch die Steuerung, einer vierten Nachricht an die Weiterleitungsvorrichtung, wobei die vierte Nachricht die zweite Etikettspanne umfasst, und die vierte Nachricht verwendet wird, um die Weiterleitungsvorrichtung zu benachrichtigen, dass die Steuerung die zweite Etikettspanne als ein globales Kandidatenetikett verwendet.

4. Verfahren zum Erhalten eines globalen Etiketts, umfassend:
Senden (S701), durch eine Weiterleitungsvorrichtung, einer ersten Nachricht an eine Steuerung, wobei die erste Nachricht eine erste Etikettspanne trägt, die mehrere Etiketten umfasst, wobei die mehreren Etiketten, die in der ersten Etikettspanne enthalten sind, ein Teilsatz mehrerer Etiketten ist, der in einem Etikettraum der Weiterleitungsvorrichtung enthalten ist, und die erste Etikettspanne nicht gleich dem Etikettraum der Weiterleitungsvorrichtung ist; und
Erhalten (S702), durch die Weiterleitungsvorrichtung, eines globalen Etiketts, das der Weiterleitungsvorrichtung gemäß der ersten Etikettspanne, die in der ersten Nachricht getragen wird, durch die Steuerung zugewiesen wird, wobei das globale Etikett ein Etikett in der ersten Etikettspanne ist;
wobei die erste Etikettspanne ein Etikett umfasst, das einem ersten etikettvermittelten Pfad durch die Weiterleitungsvorrichtung zugewiesen worden ist, die Weiterleitungsvorrichtung ein Knoten an dem ersten etikettvermittelten Pfad ist, und das Verfahren nach dem Senden, durch die Weiterleitungsvorrichtung, der ersten Nachricht an die Steuerung, und vor dem Erhalten, durch die Weiterleitungsvorrichtung, des globalen Etiketts ferner Folgendes umfasst:
Empfangen (S703), durch die Weiterleitungsvorrichtung, einer zweiten Nachricht, die durch die Steuerung gesendet wird, wobei die zweite Nachricht eine zweite Etikettspanne umfasst, die zweite Etikettspanne mehrere Etiketten umfasst, die zweite Etikettspanne ein Teilsatz der ersten Etikettspanne ist, die zweite Nachricht verwendet wird, um die Weiterleitungsvorrichtung anzuweisen, einem zweiten etikettvermittelten Pfad ein neues Etikett zuzuweisen, das neue Etikett verwendet wird, um ein erstes Etikett zu ersetzen, das dem zweiten etikettvermittelten Pfad durch die Weiterleitungsvorrichtung zuvor zugewiesen worden ist, sich das neue Etikett außerhalb der zweiten Etikettspanne befindet, der zweite etikettvermittelte Pfad ein Teilsatz des ersten etikettvermittelten Pfades ist, und wobei das erste Etikett, das dem zweiten etikettvermittelten Pfad durch die Weiterleitungsvorrichtung zuvor zugewiesen wurde, in der zweiten Etikettspanne enthalten war, die zweite Etikettspanne durch die Steuerung verwendet wird, um der Weiterleitungsvorrichtung das globale Etikett zuzuweisen und das globale Etikett ein Etikett in der zweiten Etikettspanne ist.

5. Verfahren nach Anspruch 4, wobei das Verfahren nach dem Empfangen, durch die Weiterleitungsvorrichtung, der zweiten Nachricht, die durch die Steuerung gesendet wird, und vor dem Erhalten, durch die Weiterleitungsvorrichtung, eines globalen Etiketts ferner Folgendes umfasst:
Senden (S704), durch die Weiterleitungsvorrichtung, einer dritten Nachricht an die Steuerung, wobei die dritte Nachricht verwendet wird, um die Steuerung zu benachrichtigen, dass die Weiterleitungsvorrichtung dem zweiten etikettvermittelten Pfad das neue Etikett zugewiesen hat.

6. Verfahren nach Anspruch 5, wobei das Verfahren nach dem Senden, durch die Weiterleitungsvorrichtung, der dritten Nachricht an die Steuerung, und vor dem Erhalten, durch die Weiterleitungsvorrichtung, eines globalen Etiketts ferner Folgendes umfasst:
Empfangen (S705), durch die Weiterleitungsvorrichtung, einer vierten Nachricht, die durch die Steuerung gesendet wird, wobei die vierte Nachricht die zweite Etikettspanne umfasst, und die vierte Nachricht verwendet wird, um die Weiterleitungsvorrichtung zu benachrichtigen, dass die Steuerung die zweite Etikettspanne als ein globales Kandidatenetikett verwendet.

7. Steuerung (400), umfassend:
eine erste Empfangseinheit (401), die konfiguriert ist, um eine erste Nachricht zu empfangen, die durch eine Weiterleitungsvorrichtung gesendet wird, wobei die erste Nachricht eine erste Etikettspanne trägt, die mehrere Etiketten umfasst, wobei die mehreren Etiketten, die in der ersten Etikettspanne enthalten sind, ein Teilsatz aus mehreren Etiketten ist, der in einem Etikettraum der Weiterleitungsvorrichtung enthalten ist, und die erste Etikettspanne nicht gleich dem Etikettraum der Weiterleitungsvorrichtung ist; und
eine Zuweisungseinheit (402), die konfiguriert ist, um der Weiterleitungsvorrichtung gemäß der ersten Etikettspanne, die in der ersten Nachricht getragen wird, die durch die erste Empfangseinheit empfangen wird, ein globales Etikett zuzuweisen, wobei das globale Etikett ein Etikett in der ersten Etikettspanne ist;
wobei die erste Etikettspanne ein Etikett umfasst, das einem ersten etikettvermittelten Pfad durch die Weiterleitungsvorrichtung zugewiesen worden ist, die Weiterleitungsvorrichtung ein Knoten an dem ersten etikettvermittelten Pfad ist, die Steuerung (400) ferner eine erste Sendeeinheit (403) umfasst, die erste Sendeeinheit (403) konfiguriert ist, um eine zweite Nachricht an die Weiterleitungsvorrichtung zu senden, nachdem die erste Empfangseinheit die erste Nachricht empfängt und bevor die Zuweisungseinheit der Weiterleitungsvorrichtung das globale Etikett zuweist, die zweite Nachricht eine zweite Etikettspanne umfasst, die zweite Etikettspanne mehrere Etiketten umfasst, die zweite Etikettspanne ein Teilsatz der ersten Etikettspanne ist, die zweite Nachricht verwendet wird, um die Weiterleitungsvorrichtung anzuweisen, einem zweiten etikettvermittelten Pfad ein neues Etikett zuzuweisen, das neue Etikett verwendet wird, um ein erstes Etikett zu ersetzen, das dem zweiten etikettvermittelten Pfad durch die Weiterleitungsvorrichtung zuvor zugewiesen worden ist, sich das neue Etikett außerhalb der zweiten Etikettspanne befindet, der zweite etikettvermittelte Pfad ein Teilsatz des ersten etikettvermittelten Pfades ist, und wobei das erste Etikett, das dem zweiten etikettvermittelten Pfad durch die Weiterleitungsvorrichtung zuvor zugewiesen wurde, in der zweiten Etikettspanne enthalten war, und das globale Etikett ein Etikett in der zweiten Etikettspanne ist.

8. Steuerung (400) nach Anspruch 7, wobei die Steuerung (400) ferner eine zweite Empfangseinheit (404) umfasst und die zweite Empfangseinheit (404) für Folgendes konfiguriert ist: nachdem die erste Sendeeinheit (403) die zweite Nachricht an die Weiterleitungsvorrichtung sendet und bevor die Zuweisungseinheit (402) der Weiterleitungsvorrichtung das globale Etikett zuweist, Empfangen einer dritten Nachricht, die durch die Weiterleitungsvorrichtung gesendet wird, wobei die dritte Nachricht verwendet wird, um die Steuerung zu benachrichtigen, dass die Weiterleitungsvorrichtung dem zweiten etikettvermittelten Pfad das neue Etikett zugewiesen hat.

9. Steuerung (400) nach Anspruch 8, wobei die Steuerung (400) ferner eine zweite Sendeeinheit (405) umfasst, die zweite Sendeeinheit (405) konfiguriert ist, um eine vierte Nachricht an die Weiterleitungsvorrichtung zu senden, nachdem die zweite Empfangseinheit (404) die dritte Nachricht empfängt, die durch die Weiterleitungsvorrichtung gesendet wird und bevor die Zuweisungseinheit (402) der Weiterleitungsvorrichtung das globale Etikett zuweist, die vierte Nachricht die zweite Etikettspanne umfasst und die vierte Nachricht verwendet wird, um die Weiterleitungsvorrichtung zu benachrichtigen, dass die Steuerung die zweite Etikettspanne als ein globales Kandidatenetikett verwendet.

10. Steuerung nach Anspruch 7, wobei die zweite Nachricht ferner verwendet wird, um die Weiterleitungsvorrichtung zu benachrichtigen, dass die Steuerung die zweite Etikettspanne als ein globales Kandidatenetikett verwendet.

11. Steuerung nach einem der Ansprüche 7 bis 10, wobei die erste Nachricht ferner das Etikett trägt, das dem ersten etikettvermittelten Pfad in der ersten Etikettspanne durch die Weiterleitungsvorrichtung zugewiesen worden ist, oder die erste Nachricht ferner eine Kennung einer ersten Teilspanne, eine Kennung einer zweiten Teilspanne, eine Menge an ersten Etiketten und eine Menge an zweiten Etiketten trägt, die erste Etikettspanne die erste Teilspanne und die zweite Teilspanne umfasst, ein Etikett, das dem ersten etikettvermittelten Pfad in der ersten Etikettspanne durch die Weiterleitungsvorrichtung zugewiesen worden ist, das erste Etikett ist, ein Etikett, das dem ersten etikettvermittelten Pfad in der zweiten Teilspanne durch die Weiterleitungsvorrichtung zugewiesen worden ist, das zweite Etikett ist, und die Menge an ersten Etiketten weniger als die Menge an zweiten Etiketten ist; und
die Steuerung (400) ferner eine Bestimmungseinheit (406) umfasst, wobei die Bestimmungseinheit (406) für Folgendes konfiguriert ist: nachdem die erste Empfangseinheit (401) die erste Nachricht empfängt und bevor die erste Sendeeinheit (403) die zweite Nachricht an die Weiterleitungsvorrichtung sendet, Bestimmen, dass die Menge an ersten Etiketten weniger als die Menge an zweiten Etiketten ist, gemäß dem Etikett, das dem ersten etikettvermittelten Pfad in der ersten Etikettspanne durch die Weiterleitungsvorrichtung zugewiesen worden ist und in der ersten Nachricht getragen wird, oder Bestimmen, dass die Menge an ersten Etiketten weniger als die Menge an zweiten Etiketten ist, gemäß der Menge an ersten Etiketten und der Menge an zweiten Etiketten, die in der ersten Nachricht getragen werden, und die Bestimmungseinheit (406) ferner konfiguriert ist, um zu bestimmen, dass die erste Teilspanne die zweite Etikettspanne ist, basierend darauf, dass die Menge an ersten Etiketten weniger als die Menge an zweiten Etiketten ist.

12. Steuerung nach einem der Ansprüche 7 bis 11, wobei die Steuerung (400) ferner eine dritte Sendeeinheit (407) umfasst, die dritte Sendeeinheit (407) konfiguriert ist, um eine fünfte Nachricht an die Weiterleitungsvorrichtung zu senden, bevor die erste Empfangseinheit die erste Nachricht empfängt, die durch die Weiterleitungsvorrichtung gesendet wird, die fünfte Nachricht verwendet wird, um die Weiterleitungsvorrichtung anzuweisen, den Etikettraum der Weiterleitungsvorrichtung an die Steuerung zu senden, und die fünfte Nachricht ferner verwendet wird, um die Weiterleitungsvorrichtung anzuweisen, Etiketten, die durch die Weiterleitungsvorrichtung zugewiesen worden sind oder eine Menge an Etiketten, die durch die Weiterleitungsvorrichtung zugewiesen worden ist, an die Steuerung (400) zu senden.

13. Steuerung nach Anspruch 7, wobei die erste Nachricht ferner ein Etikett trägt, das einem ersten etikettvermittelten Pfad in der ersten Etikettspanne durch die Weiterleitungsvorrichtung zugewiesen worden ist und die Weiterleitungsvorrichtung ein Knoten an dem ersten etikettvermittelten Pfad ist; und
die Zuweisungseinheit (402) insbesondere für Folgendes konfiguriert ist: Zuweisen des globalen Etiketts an die Weiterleitungsvorrichtung gemäß der ersten Etikettspanne und dem Etikett, das dem ersten etikettvermittelten Pfad durch die Weiterleitungsvorrichtung zugewiesen worden ist, wobei das globale Etikett das Etikett, das dem ersten etikettvermittelten Pfad durch die Weiterleitungsvorrichtung zugewiesen worden ist, nicht schneidet.

14. Weiterleitungsvorrichtung, umfassend:
eine erste Sendeeinheit (901), die konfiguriert ist, um eine erste Nachricht an eine Steuerung zu senden, wobei die erste Nachricht eine erste Etikettspanne trägt, die mehrere Etiketten umfasst, wobei die mehreren Etiketten, die in der ersten Etikettspanne enthalten sind, ein Teilsatz von mehreren Etiketten ist, der in einem Etikettraum der Weiterleitungsvorrichtung enthalten ist, und die erste Etikettspanne nicht gleich dem Etikettraum der Weiterleitungsvorrichtung ist; und
eine Erhaltungseinheit (902), die konfiguriert ist, um ein globales Etikett zu erhalten, das der Weiterleitungsvorrichtung gemäß der ersten Etikettspanne, die in der ersten Nachricht getragen wird, durch die Steuerung zugewiesen wird, wobei das globale Etikett ein Etikett in der ersten Etikettspanne ist;
wobei die erste Etikettspanne ein Etikett umfasst, das einem ersten etikettvermittelten Pfad durch die Weiterleitungsvorrichtung zugewiesen worden ist, die Weiterleitungsvorrichtung ein Knoten an dem ersten etikettvermittelten Pfad ist und die Weiterleitungsvorrichtung ferner Folgendes umfasst:
eine erste Empfangseinheit (903), die für Folgendes konfiguriert ist: nachdem die erste Sendeeinheit die erste Nachricht sendet und bevor die Erhaltungseinheit das globale Etikett erhält, Empfangen einer zweiten Nachricht, die durch die Steuerung gesendet wird, wobei die zweite Nachricht eine zweite Etikettspanne umfasst, die zweite Etikettspanne mehrere Etiketten umfasst, die zweite Etikettspanne ein Teilsatz der ersten Etikettspanne ist, die zweite Nachricht verwendet wird, um die Weiterleitungsvorrichtung anzuweisen, einem zweiten etikettvermittelten Pfad ein neues Etikett zuzuweisen, das neue Etikett verwendet wird, um ein erstes Etikett zu ersetzen, das dem zweiten etikettvermittelten Pfad durch die Weiterleitungsvorrichtung zuvor zugewiesen worden ist, sich das neue Etikett außerhalb der zweiten Etikettspanne befindet, der zweite etikettvermittelte Pfad ein Teilsatz des ersten etikettvermittelten Pfades ist, und wobei das erste Etikett, das dem zweiten etikettvermittelten Pfad durch die Weiterleitungsvorrichtung zuvor zugewiesen worden ist, in der zweiten Etikettspanne enthalten war, die zweite Etikettspanne durch die Steuerung verwendet wird, um der Weiterleitungsvorrichtung das globale Etikett zuzuweisen, und das globale Etikett ein Etikett in der zweiten Etikettspanne ist.

15. Weiterleitungsvorrichtung nach Anspruch 14, wobei die Weiterleitungsvorrichtung ferner Folgendes umfasst:
eine zweite Sendeeinheit (904), die konfiguriert ist, um eine dritte Nachricht an die Steuerung zu senden, nachdem die erste Empfangseinheit (903) die zweite Nachricht empfängt und bevor die Erhaltungseinheit (902) das globale Etikett erhält, wobei die dritte Nachricht verwendet wird, um die Steuerung zu benachrichtigen, dass die Weiterleitungsvorrichtung dem zweiten etikettvermittelten Pfad das neue Etikett zugewiesen hat.

16. Weiterleitungsvorrichtung nach Anspruch 15, wobei die Weiterleitungsvorrichtung ferner Folgendes umfasst:
eine zweite Empfangseinheit (905), die für Folgendes konfiguriert ist: nachdem die zweite Sendeeinheit die dritte Nachricht an die Steuerung sendet und bevor die Erhaltungseinheit das globale Etikett erhält, Empfangen einer vierten Nachricht, die durch die Steuerung gesendet wird, wobei die vierte Nachricht die zweite Etikettspanne umfasst, und die vierte Nachricht verwendet wird, um die Weiterleitungsvorrichtung zu benachrichtigen, dass die Steuerung die zweite Etikettspanne als ein globales Kandidatenetikett verwendet.

17. Weiterleitungsvorrichtung nach Anspruch 14, wobei die zweite Nachricht ferner verwendet wird, um die Weiterleitungsvorrichtung zu benachrichtigen, dass die Steuerung die zweite Etikettspanne als ein globales Kandidatenetikett verwendet.

18. Weiterleitungsvorrichtung nach einem der Ansprüche 14 bis 17, wobei:
die zweite Etikettspanne eine erste Teilspanne ist, die erste Etikettspanne die erste Teilspanne und eine zweite Teilspanne umfasst, das Etikett, das dem ersten etikettvermittelten Pfad in der ersten Etikettspanne durch die Weiterleitungsvorrichtung zugewiesen worden ist, ein erstes Etikett und ein zweites Etikett umfasst, eine Menge der Etiketten, die dem ersten etikettvermittelten Pfad in der ersten Etikettspanne durch die Weiterleitungsvorrichtung zugewiesen worden ist, eine Menge der ersten Etiketten und eine Menge der zweiten Etiketten umfasst, das erste Etikett ein Etikett in der ersten Teilspanne ist, das zweite Etikett ein Etikett in der zweiten Teilspanne ist, und die Menge an ersten Etiketten weniger als die Menge an zweiten Etiketten ist.

19. Weiterleitungsvorrichtung nach einem der Ansprüche 14 bis 18, wobei die Weiterleitungsvorrichtung ferner eine dritte Empfangseinheit (906) umfasst, wobei die dritte Empfangseinheit (906) für Folgendes konfiguriert ist: bevor die erste Sendeeinheit (901) die erste Nachricht sendet, Empfangen einer fünften Nachricht, die durch die Steuerung gesendet wird, wobei die fünfte Nachricht verwendet wird, um die Weiterleitungsvorrichtung anzuweisen, den Etikettraum der Weiterleitungsvorrichtung an die Steuerung zu senden, und die fünfte Nachricht ferner verwendet wird, um die Weiterleitungsvorrichtung anzuweisen, Etiketten, die durch die Weiterleitungsvorrichtung zugewiesen worden sind, oder eine Menge an Etiketten, die durch die Weiterleitungsvorrichtung zugewiesen worden ist, an die Steuerung zu senden.

20. Weiterleitungsvorrichtung nach Anspruch 14, wobei die erste Nachricht ferner ein Etikett trägt, das einem ersten etikettvermittelten Pfad in der ersten Etikettspanne durch die Weiterleitungsvorrichtung zugewiesen worden ist, die Weiterleitungsvorrichtung ein Knoten an dem ersten etikettvermittelten Pfad ist und das globale Etikett das Etikett, das dem ersten etikettvermittelten Pfad durch die Weiterleitungsvorrichtung zugewiesen worden ist, nicht schneidet.

## Revendications

1. Procédé d'allocation d'une étiquette globale, comprenant :
la réception (S301), par un contrôleur, d'un premier message envoyé par un dispositif de transfert, dans lequel le premier message transmet une première plage d'étiquettes, comprenant des étiquettes multiples, dans lequel les étiquettes multiples comprises dans la première plage d'étiquettes sont un sous-ensemble d'étiquettes multiples comprises dans un espace d'étiquettes du dispositif de transfert, et la première plage d'étiquettes n'est pas égale à l'espace d'étiquettes du dispositif de transfert ; et
l'allocation (S302), par un contrôleur, d'une étiquette globale au dispositif de transfert selon la première plage d'étiquettes transmise dans le premier message, dans lequel l'étiquette globale est une étiquette dans la première plage d'étiquettes ;
dans lequel la première plage d'étiquettes comprend une étiquette qui a été allouée par le dispositif de transfert à un premier chemin commuté par étiquette, le dispositif de transfert est un nœud sur le premier chemin commuté par étiquette, et après la réception (S301), par un contrôleur, du premier message, et avant l'allocation (S302), par le contrôleur, de l'étiquette globale au dispositif de transfert, le procédé comprend en outre : l'envoi (S303), par le contrôleur, d'un deuxième message au dispositif de transfert, dans lequel le deuxième message comprend une deuxième plage d'étiquettes, la deuxième plage d'étiquettes comprend des étiquettes multiples, la deuxième plage d'étiquettes est un sous-ensemble de la première plage d'étiquettes, le deuxième message est utilisé pour instruire le dispositif de transfert d'allouer une nouvelle étiquette à un deuxième chemin commuté par étiquette, la nouvelle étiquette est utilisée pour remplacer une première étiquette qui a été précédemment allouée par le dispositif de transfert au deuxième chemin commuté par étiquette, la nouvelle étiquette est en dehors de la deuxième plage d'étiquettes, le deuxième chemin commuté par étiquette est un sous-ensemble du premier chemin commuté par étiquette, et dans lequel la première étiquette qui a été précédemment allouée par le dispositif de transfert au deuxième chemin commuté par étiquette était comprise dans la deuxième plage d'étiquettes ; et
l'allocation (S302), par le contrôleur, de l'étiquette globale au dispositif de transfert selon la première plage d'étiquettes transmise dans le premier message, dans lequel l'étiquette globale est une étiquette dans la première plage d'étiquettes, comprend plus spécifiquement :
l'allocation, par le contrôleur, de l'étiquette globale au dispositif de transfert selon la deuxième plage d'étiquettes, dans lequel l'étiquette globale est une étiquette dans la deuxième plage d'étiquettes.

2. Procédé selon la revendication 1, dans lequel après l'envoi, par le contrôleur, du deuxième message au dispositif de transfert, et avant l'allocation, par le contrôleur, de l'étiquette globale au dispositif de transfert, le procédé comprend en outre :
la réception (S304), par le contrôleur, d'un troisième message envoyé par le dispositif de transfert, dans lequel le troisième message est utilisé pour informer le contrôleur que le dispositif de transfert a alloué la nouvelle étiquette au deuxième chemin commuté par étiquette.

3. Procédé selon la revendication 2, dans lequel après la réception, par le contrôleur, du troisième message envoyé par le dispositif de transfert, et avant l'allocation, par le contrôleur, de l'étiquette globale au dispositif de transfert, le procédé comprend en outre :
l'envoi (S305), par le contrôleur, d'un quatrième message au dispositif de transfert, dans lequel le quatrième message comprend la deuxième plage d'étiquettes, et le quatrième message est utilisé pour informer le dispositif de transfert que le contrôleur utilise la deuxième plage d'étiquettes comme une étiquette globale candidate.

4. Procédé d'obtention d'une étiquette globale, comprenant :
l'envoi (S701), par un dispositif de transfert, d'un premier message à un contrôleur, dans lequel le premier message transmet une première plage d'étiquettes comprenant des étiquettes multiples, dans lequel les étiquettes multiples comprises dans la première plage d'étiquettes sont un sous-ensemble d'étiquettes multiples comprises dans un espace d'étiquettes du dispositif de transfert, et la première plage d'étiquettes n'est pas égale à l'espace d'étiquettes du dispositif de transfert ; et
l'obtention (S702), par le dispositif de transfert, d'une étiquette globale qui est allouée par le contrôleur au dispositif de transfert selon la première plage d'étiquettes transmise dans le premier message, dans lequel l'étiquette globale est une étiquette dans la première plage d'étiquettes ; dans lequel la première plage d'étiquettes comprend une étiquette qui a été allouée par le dispositif de transfert à un premier chemin commuté par étiquette, le dispositif de transfert est un nœud sur le premier chemin commuté par étiquette, et après l'envoi, par le dispositif de transfert, du premier message au contrôleur, et avant l'obtention, par le dispositif de transfert, de l'étiquette globale, le procédé comprend en outre :
la réception (S703), par le dispositif de transfert, d'un deuxième message envoyé par le contrôleur, dans lequel le deuxième message comprend une deuxième plage d'étiquettes, la deuxième plage d'étiquettes comprend des étiquettes multiples, la deuxième plage d'étiquettes est un sous-ensemble de la première plage d'étiquettes, le deuxième message est utilisé pour instruire le dispositif de transfert d'allouer une nouvelle étiquette à un deuxième chemin commuté par étiquette, la nouvelle étiquette est utilisée pour remplacer une première étiquette qui a été précédemment allouée par le dispositif de transfert au deuxième chemin commuté par étiquette, la nouvelle étiquette est en dehors de la deuxième plage d'étiquettes, le deuxième chemin commuté par étiquette est un sous-ensemble du premier chemin commuté par étiquette, et dans lequel la première étiquette qui a été précédemment allouée par le dispositif de transfert au deuxième chemin commuté par étiquette était comprise dans la deuxième plage d'étiquettes, la deuxième plage d'étiquettes est utilisée par le contrôleur pour allouer l'étiquette globale au dispositif de transfert, et l'étiquette globale est une étiquette dans la deuxième plage d'étiquettes.

5. Procédé selon la revendication 4, dans lequel après la réception, par le dispositif de transfert, du deuxième message envoyé par le contrôleur, et avant l'obtention, par le dispositif de transfert, d'une étiquette globale, le procédé comprend en outre :
l'envoi (S704), par le dispositif de transfert, d'un troisième message au contrôleur, dans lequel le troisième message est utilisé pour informer le contrôleur que le dispositif de transfert a alloué la nouvelle étiquette au deuxième chemin commuté par étiquette.

6. Procédé selon la revendication 5, dans lequel après l'envoi, par le dispositif de transfert, du troisième message au contrôleur, et avant l'obtention, par le dispositif de transfert, d'une étiquette globale, le procédé comprend en outre :
la réception (S705), par le dispositif de transfert, d'un quatrième message envoyé par le contrôleur, dans lequel le quatrième message comprend la deuxième plage d'étiquettes, et le quatrième message est utilisé pour informer le dispositif de transfert que le contrôleur utilise la deuxième plage d'étiquettes comme une étiquette globale candidate.

7. Contrôleur (400), comprenant :
une première unité de réception (401), configurée pour recevoir un premier message envoyé par un dispositif de transfert, dans lequel le premier message transmet une première plage d'étiquettes comprenant des étiquettes multiples, dans lequel les étiquettes multiples comprises dans la première plage d'étiquettes sont un sous-ensemble d'étiquettes multiples comprises dans un espace d'étiquettes du dispositif de transfert, et la première plage d'étiquettes n'est pas égale à l'espace d'étiquettes du dispositif de transfert ; et
une unité d'allocation (402), configurée pour allouer une étiquette globale au dispositif de transfert selon la première plage d'étiquettes transmise dans le premier message qui est reçu par la première unité de réception, dans lequel l'étiquette globale est une étiquette dans la première plage d'étiquettes ;
dans lequel la première plage d'étiquettes comprend une étiquette qui a été allouée par le dispositif de transfert à un premier chemin commuté par étiquette, le dispositif de transfert est un nœud sur le premier chemin commuté par étiquette, le contrôleur (400) comprend en outre une première unité d'envoi (403), la première unité d'envoi (403) est configurée pour envoyer un deuxième message au dispositif de transfert après que la première unité de réception reçoit le premier message et avant que l'unité d'allocation alloue l'étiquette globale au dispositif de transfert, le deuxième message comprend une deuxième plage d'étiquettes, la deuxième plage d'étiquettes comprend des étiquettes multiples, la deuxième plage d'étiquettes est un sous-ensemble de la première plage d'étiquettes, le deuxième message est utilisé pour instruire le dispositif de transfert d'allouer une nouvelle étiquette à un deuxième chemin commuté par étiquette, la nouvelle étiquette est utilisée pour remplacer une première étiquette qui a été précédemment allouée par le dispositif de transfert au deuxième chemin commuté par étiquette, la nouvelle étiquette est en dehors de la deuxième plage d'étiquettes, le deuxième chemin commuté par étiquette est un sous-ensemble du premier chemin commuté par étiquette, et dans lequel la première étiquette qui a été précédemment allouée par le dispositif de transfert au deuxième chemin commuté par étiquette était comprise dans la deuxième plage d'étiquette, et l'étiquette globale est une étiquette dans la deuxième plage d'étiquettes.

8. Contrôleur (400) selon la revendication 7, dans lequel le contrôleur (400) comprend en outre une deuxième unité de réception (404), et la deuxième unité de réception (404) est configurée pour : après que la première unité d'envoi (403) envoie le deuxième message au dispositif de transfert et avant que l'unité d'allocation (402) alloue l'étiquette globale au dispositif de transfert, recevoir un troisième message envoyé par le dispositif de transfert, dans lequel le troisième message est utilisé pour informer le contrôleur que le dispositif de transfert a alloué la nouvelle étiquette au deuxième chemin commuté par étiquette.

9. Contrôleur (400) selon la revendication 8, dans lequel le contrôleur (400) comprend en outre une deuxième unité d'envoi (405), la deuxième unité d'envoi (405) est configurée pour envoyer un quatrième message au dispositif de transfert après que la deuxième unité de réception (404) reçoit le troisième message envoyé par le dispositif de transfert et avant que l'unité d'allocation (402) alloue l'étiquette globale au dispositif de transfert, le quatrième message comprend la deuxième plage d'étiquettes, et le quatrième message est utilisé pour informer le dispositif de transfert que le contrôleur utilise la deuxième plage d'étiquettes comme une étiquette globale candidate.

10. Contrôleur selon la revendication 7, dans lequel le deuxième message est en outre utilisé pour informer le dispositif de transfert que le contrôleur utilise la deuxième plage d'étiquettes comme une étiquette globale candidate.

11. Contrôleur selon une quelconque des revendications 7 à 10, dans lequel le premier message transmet en outre l'étiquette qui a été allouée par le dispositif de transfert au premier chemin commuté par étiquette dans la première plage d'étiquettes, ou le premier message transmet en outre un identificateur d'une première sous-plage, un identificateur d'une deuxième sous-plage, une quantité de premières étiquettes, et une quantité de deuxièmes étiquettes, la première plage d'étiquettes comprend la première sous-plage et la deuxième sous-plage, une étiquette qui a été allouée par le dispositif de transfert au premier chemin commuté par étiquette dans la première plage d'étiquettes est la première étiquette, une étiquette qui a été allouée par le dispositif de transfert au premier chemin commuté par étiquette dans la deuxième sous-plage est la deuxième étiquette, et la quantité de premières étiquettes est inférieure à la quantité de deuxièmes étiquettes ; et
le contrôleur (400) comprend en outre une unité de détermination (406), l'unité de détermination (406) est configurée pour : après que la première unité de réception (401) reçoit le premier message et avant que la première unité d'envoi (403) envoie le deuxième message au dispositif de transfert, déterminer que la quantité de premières étiquettes est inférieure à la quantité de deuxièmes étiquettes selon l'étiquette qui a été allouée par le dispositif de transfert au premier chemin commuté par étiquette dans la première plage d'étiquettes et est transmise dans le premier message, ou déterminer que la quantité de premières étiquettes est inférieure à la quantité de deuxièmes étiquettes selon la quantité de premières étiquettes et la quantité de deuxièmes étiquettes transmises dans le premier message, et l'unité de détermination (406) est en outre configurée pour déterminer que la première sous-plage est la deuxième plage d'étiquettes en se basant sur le fait que la quantité de premières étiquettes est inférieure à la quantité de deuxièmes étiquettes.

12. Contrôleur selon une quelconque des revendications 7 à 11, dans lequel le contrôleur (400) comprend en outre une troisième unité d'envoi (407), la troisième unité d'envoi (407) est configurée pour envoyer un cinquième message au dispositif de transfert avant que la première unité de réception reçoive le premier message envoyé par le dispositif de transfert, le cinquième message est utilisé pour instruire le dispositif de transfert d'envoyer l'espace d'étiquettes du dispositif de transfert au contrôleur, et le cinquième message est en outre utilisé pour instruire le dispositif de transfert d'envoyer, au contrôleur (400), des étiquettes qui ont été allouées par le dispositif de transfert ou une quantité des étiquettes qui ont été allouées par le dispositif de transfert.

13. Contrôleur selon la revendication 7, dans lequel le premier message transmet en outre une étiquette qui a été allouée par le dispositif de transfert à un premier chemin commuté par étiquette dans la première plage d'étiquettes, et le dispositif de transfert est un nœud sur le premier chemin commuté par étiquette ; et
l'unité d'allocation (402) et plus spécifiquement configurée pour : allouer l'étiquette globale au dispositif de transfert selon la première plage d'étiquettes et l'étiquette qui a été allouée par le dispositif de transfert au premier chemin commuté par étiquette, dans lequel l'étiquette globale n'interfère pas avec l'étiquette qui a été allouée par le dispositif de transfert au premier chemin commuté par étiquette.

14. Dispositif de transfert, comprenant :
une première unité d'envoi (901), configurée pour envoyer un premier message à un contrôleur, dans lequel le premier message transmet une première plage d'étiquettes, comprenant des étiquettes multiples, dans lequel les étiquettes multiples comprises dans la première plage d'étiquettes sont un sous-ensemble d'étiquettes multiples comprises dans un espace d'étiquettes du dispositif de transfert, et la première plage d'étiquettes n'est pas égale à l'espace d'étiquettes du dispositif de transfert ; et
une unité d'obtention (902), configurée pour obtenir une étiquette globale qui est allouée par le contrôleur au dispositif de transfert selon la première plage d'étiquettes transmise dans le premier message, dans lequel l'étiquette globale est une étiquette dans la première plage d'étiquettes ;
dans lequel la première plage d'étiquettes comprend une étiquette qui a été allouée par le dispositif de transfert à un premier chemin commuté par étiquette, le dispositif de transfert est un nœud sur le premier chemin commuté par étiquette, et le dispositif de transfert comprend en outre :
une première unité de réception (903), configurée pour : après que la première unité d'envoi envoie le premier message et avant que l'unité obtention obtienne l'étiquette globale, recevoir un deuxième message envoyé par le contrôleur, dans lequel le deuxième message comprend une deuxième plage d'étiquettes, la deuxième plage d'étiquettes comprend des étiquettes multiples, la deuxième plage d'étiquettes est un sous-ensemble de la première plage d'étiquettes, le deuxième message est utilisé pour instruire le dispositif de transfert d'allouer une nouvelle étiquette à un deuxième chemin commuté par étiquette, la nouvelle étiquette est utilisée pour remplacer une première étiquette qui a été précédemment allouée par le dispositif de transfert au deuxième chemin commuté par étiquette, la nouvelle étiquette est en dehors de la deuxième plage d'étiquettes, le deuxième chemin commuté par étiquette est un sous-ensemble du premier chemin commuté par étiquette, et dans lequel la première étiquette qui a été précédemment allouée par le dispositif de transfert au deuxième chemin commuté par étiquette était comprise dans la deuxième plage d'étiquettes, la deuxième plage d'étiquettes est utilisée par le contrôleur pour allouer l'étiquette globale au dispositif de transfert, et l'étiquette globale est une étiquette dans la deuxième plage d'étiquettes.

15. Dispositif de transfert selon la revendication 14, dans lequel le dispositif de transfert comprend en outre :
une deuxième unité d'envoi (904), configurée pour envoyer un troisième message au contrôleur après que la première unité de réception (903) reçoit le deuxième message et avant que l'unité d'obtention (902) obtienne l'étiquette globale, dans lequel le troisième message est utilisé pour informer le contrôleur que le dispositif de transfert a alloué la nouvelle étiquette au deuxième chemin commuté par étiquette.

16. Dispositif de transfert selon la revendication 15, dans lequel le dispositif de transfert comprend en outre :
une deuxième unité de réception (905), configurée pour : après que la deuxième unité d'envoi envoie le troisième message au contrôleur et avant que l'unité d'obtention obtienne l'étiquette globale, recevoir un quatrième message envoyé par le contrôleur, dans lequel le quatrième message comprend la deuxième plage d'étiquettes, et le quatrième message est utilisé pour informer le dispositif de transfert que le contrôleur utilise la deuxième plage d'étiquettes comme une étiquette globale candidate.

17. Dispositif de transfert selon la revendication 14, dans lequel le deuxième message est en outre utilisé pour informer le dispositif de transfert que le contrôleur utilise la deuxième plage d'étiquettes comme une étiquette globale candidate.

18. Dispositif de transfert selon une quelconque des revendications 14 à 17, dans lequel :
la deuxième plage d'étiquettes est une première sous-plage, la première plage d'étiquettes comprend la première sous-plage et une deuxième sous-plage, l'étiquette qui a été allouée par le dispositif de transfert au premier chemin commuté par étiquette dans la première plage d'étiquettes comprend une première étiquette et une deuxième étiquette, une quantité des étiquettes qui ont été allouées par le dispositif de transfert au premier chemin commuté par étiquette dans la première plage d'étiquettes comprend une quantité des premières étiquettes et une quantité des deuxièmes étiquettes, la première étiquette est une étiquette dans la première sous-plage, la deuxième étiquette est une étiquette dans la deuxième sous-plage, et la quantité de premières étiquettes est inférieure à la quantité de deuxièmes étiquettes.

19. Dispositif de transfert selon une quelconque des revendications 14 à 18, dans lequel le dispositif de transfert comprend en outre une troisième unité de réception (906), la troisième unité de réception (906) est configurée pour : avant que la première unité d'envoi (901) envoie le premier message, recevoir un cinquième message envoyé par le contrôleur, le cinquième message est utilisé pour instruire le dispositif de transfert d'envoyer l'espace d'étiquettes du dispositif de transfert au contrôleur, et le cinquième message est en outre utilisé pour instruire le dispositif de transfert d'envoyer, au contrôleur, des étiquettes qui ont été allouées par le dispositif de transfert ou une quantité d'étiquettes qui ont été allouées par le dispositif de transfert.

20. Dispositif de transfert selon la revendication 14, dans lequel le premier message transmet en outre une étiquette qui a été allouée par le dispositif de transfert à un premier chemin commuté par étiquette dans la première plage d'étiquettes, le dispositif de transfert est un nœud sur le premier chemin commuté par étiquette, et l'étiquette globale n'interfère pas avec l'étiquette qui a été allouée par le dispositif de transfert au premier chemin commuté par étiquette.
